# EUROPEAN PATENT SPECIFICATION

(11) **EP 4 131 987 B1**
(45) Date of publication and mention of the grant of the patent: **21.05.2025**
(21) Application number: 20930485.6
(22) Date of filing: 01.12.2020
(51) Int. Cl.: H04Q 11/00

(54) **OPTICAL NETWORK UNIT REGISTRATION METHOD, OPTICAL NETWORK UNIT, OPTICAL LINE TERMINAL AND SYSTEM**
VERFAHREN ZUR REGISTRIERUNG EINER OPTISCHEN NETZWERKEINHEIT, OPTISCHE NETZWERKEINHEIT, OPTISCHES LEITUNGSENDGERÄT UND SYSTEM
PROCÉDÉ D'ENREGISTREMENT D'UNITÉ DE RÉSEAU OPTIQUE, UNITÉ DE RÉSEAU OPTIQUE, TERMINAL DE LIGNE OPTIQUE ET SYSTÈME

(30) Priority: 07.04.2020 CN 202010266352
(43) Date of publication of application: 08.02.2023
(73) Proprietor: ZTE Corporation, Shenzhen, Guangdong 518057 (CN)
(72) Inventor: YUAN, Liquan, Shenzhen, Guangdong 518057 (CN); ZHANG, Weiliang, Shenzhen, Guangdong 518057 (CN)
(74) Representative: Canzler & Bergmeier Patentanwälte Partnerschaft mbB
(86) International application number: PCT/CN2020/133129
(87) International publication number: WO 2021/203721

(56) References cited:
- EP-A1- 2 962 474
- EP-A1- 3 537 628
- EP-B1- 2 962 474
- CN-A- 101 998 190
- CN-A- 107 517 122
- CN-A- 109 104 646
- US-A1- 2008 273 877
- MICHAEL P MCGARRY ET AL: "An Evolutionary WDM Upgrade for EPONs", 1 January 2005 (2005-01-01), XP055115813, Retrieved from the Internet <URL:http://mre.faculty.asu.edu/EPONupgrade.pdf> [retrieved on 20140429]
- DENIS KHOTIMSKY ZTE USA: "ONU activation in TWDM-PON systems;C", ITU-T DRAFT ; STUDY PERIOD 2013-2016, INTERNATIONAL TELECOMMUNICATION UNION, GENEVA ; CH, vol. 2/15, 26 February 2013 (2013-02-26), pages 1 - 6, XP044076463
- WEILIANG ZHANG ZTE CHINA: "Text proposal of low latency ONU activation process;Cn", vol. 2/15, 16 April 2020 (2020-04-16), pages 1 - 7, XP044286323, Retrieved from the Internet <URL:https://www.itu.int/ifa/t/2017/sg15/exchange/wp1/q2/20-04-20_MultiCall/200420_D65_ZTE_Text%20proposal%20of%20low%20latency%20ONU%20activation%20process%20for%20G.hsp.ComTC.docx> [retrieved on 20200416]

## Description

### TECHNICAL FIELD

The present application relates to wireless communication networks, in particular to a method for registering an optical network unit, an optical network unit, an optical line terminal and a system.

### BACKGROUND

In a Passive Optical Network (PON) system, an Optical Network Unit (ONU) of low-latency work type supports the use of another uplink wavelength different from the wavelength of the low-latency service as the uplink wavelength for registration, so that the latency caused by the quiet window can be eliminated on the wavelength of the low-latency service when registering to an Optical Line Terminal (OLT). Therefore, it is necessary to control the work type of the ONU, so that the ONU can work under two work types. Non-patent document "Michael P Mcgarry ET AL: "An Evolutionary WDM Upgrade for EPONs", 1 January 2005 (2005-01-01), XP055115813" proposes a method for providing an evolutionary upgrade to WDM in EPONs. European patent application publication No. 2962474A1 provides a multi-wavelength passive optical network (MW-PON) includes an optical distribution network (ODN), a plurality of optical line terminations (OLTs) and an optical network unit (ONU). The ODN includes a trunk fiber, one or more branching elements, and a plurality of distribution fibers. Each OLT is associated with an individual bi-directional wavelength channel using a corresponding single downstream wavelength and a corresponding single upstream wavelength, and supporting a specific downstream line rate and one or more distinct upstream line rates. The ONU is communicatively coupled to a respective distribution fiber, being tunable over a specific range of downstream wavelengths and a specific range of upstream wavelengths, and supporting a specific downstream line rate and a specific upstream line rate. The OLT is configured to assemble a broadcast management message conveying information about bi-directional wavelength channels in said MW-PON system and transmit said message downstream over the associated bi-directional wavelength channel; Non-patent document "DENIS KHOTIMSKY ZTE USA: "ONU activation in TWDM-PON systems; C", ITU-T DRAFT ; STUDY PERIOD 2013-2016, INTERNATIONAL TELECOMMUNICATION UNION, GENEVA ; CH, vol. 2/15, 26 February 2013 (2013-02-26), pages 1-6, XP044076463" proposes a new downstream broadcast PLOAM message type "Channel_Map" to effectively and efficiently lead the ONU to finding a valid activation channel; the proposed procedure requires standardization of essential signalling mechanisms only, and allows to leave the operational issues to the operations. European patent application publication No. 3537628A1 discloses a PON system, an OLT, and an ONU, and relates to the optical communications field. The PON system includes an OLT and at least two ONUs, and the OLT and the at least two ONUs exchange data on one downstream channel and two upstream channels. The OLT sends downstream data to each ONU on the downstream channel, where the downstream data includes an upstream bandwidth grant, and the upstream bandwidth grant is used to control the ONU to send upstream data; the ONU receives the downstream data on the downstream channel, and sends the upstream data on a first upstream channel or a second upstream channel based on the upstream bandwidth grant included in the downstream data; and the OLT receives, on the first upstream channel and the second upstream channel, the upstream data sent by each ONU, where a registration function is disabled on the first upstream channel, and the registration function is enabled on the second upstream channel.

### SUMMARY

The present application provides a method for registering an optical network unit, an optical network unit, an optical line terminal, and a system. The features of the method for registering an optical network unit, the optical network unit, the optical line terminal, and the system according to the present invention are defined in the independent claims, and the preferable features according to the present invention are defined in the dependent claims.

An embodiment of the present application provides a method for registering an optical network unit applied in an optical network unit, including: determining a current work type of the ONU according to a work type supported currently by the ONU and a downlink message from an optical line terminal (OLT), wherein the downlink message is configured to indicate a work type of the ONU supported by the OLT; and completing a registration to the OLT based on the determined current work type of the ONU.

An embodiment of the present application provides a method for registering an optical network unit applied in an optical line terminal, including: sending a downlink message to the ONU so that the ONU determines a work type of the ONU according to a supported work type and the downlink message, wherein the downlink message is configured to indicate a work type of the ONU supported by the OLT; and the OLT completing a registration of the ONU according to the supported work type of the ONU.

An embodiment of the present application provides an optical network unit including: a work type determination module configured to determine a current work type of the ONU according to a work type supported currently by the ONU and a downlink message from an optical line terminal (OLT), wherein the downlink message is configured to indicate a work type of the ONU supported by the OLT; and a registration module configured to complete a registration to the OLT based on the determined current work type of the ONU.

An embodiment of the present application provides an optical line terminal including: a downlink message sending module configured to send a downlink message to an ONU so that the ONU determines a work type of the ONU according to a supported work type and the downlink message, wherein the downlink message is configured to indicate a work type of the ONU supported by the OLT; and a registration module configured to complete a registration of the ONU according to the supported work type of the ONU.

An embodiment of the present application provides an optical network system including: an optical line terminal (OLT) and an optical network unit (ONU), wherein,
the OLT is configured to send a downlink message to the ONU, wherein the downlink message is configured to indicate a work type of the ONU supported by the OLT; and the ONU is configured to determine a current work type of the ONU according to a work type supported currently by the ONU and the downlink message from OLT, and complete a registration to the OLT based on the determined current work type of the ONU.

An embodiment of the present application provides a system for registering an optical network unit including: a memory and a processor; wherein the memory is configured to store executable program codes; and the processor is configured to read the executable program codes stored in the memory to execute any one of the above methods for registering an optical network unit.

An embodiment of the present application provides a storage medium storing a computer program thereon, wherein the computer program, when executed by a processor, cause the processor to implement any one of the methods for registering an optical network unit in the embodiments of the present application.

As for the above embodiments and other aspects of the present application, as well as implementations thereof, further explanations are provided in the Brief Description of Drawings, the Detail Description of Embodiments and the Claims.

### BRIEF DESCRIPTION OF DRAWINGS

Fig. 1 is a schematic diagram of a topology structure of a passive optical network according to an embodiment of the present application.
Fig. 2 is a schematic diagram of a topology structure of an OLT and an ONU in a low-latency working mode according to an exemplary embodiment of the present application.
Fig. 3 is another schematic diagram of a topology structure of an OLT and an ONU in a low-latency working mode according to an exemplary embodiment of the present application.
Fig. 4 is a schematic flowchart of a method for registering an optical network unit according to an embodiment of the present application.
Fig. 5 is a schematic flowchart of an ONU state transition according to an embodiment of the present application.
Fig. 6 is a schematic flowchart of a method for registering an optical network unit according to another embodiment of the present application.
Fig. 7 is a schematic structural diagram of an optical network unit according to an embodiment of the present application.
Fig. 8 is a schematic structural diagram of an optical line terminal according to an embodiment of the present application.
Fig. 9 is a schematic structural diagram of an optical network system according to an embodiment of the present application.
Fig. 10 is a structural diagram of an exemplary hardware architecture of a computing device according to an embodiment of the present application.

### DETAIL DESCRIPTION OF EMBODIMENTS

To make the objectives, technical solutions and advantages of the present application clearer, the embodiments of the present application will be described in detail below with reference to the accompanying drawings. It should be noted that, the embodiments in the present application and the features in the embodiments may be arbitrarily combined with each other if there is no conflict.

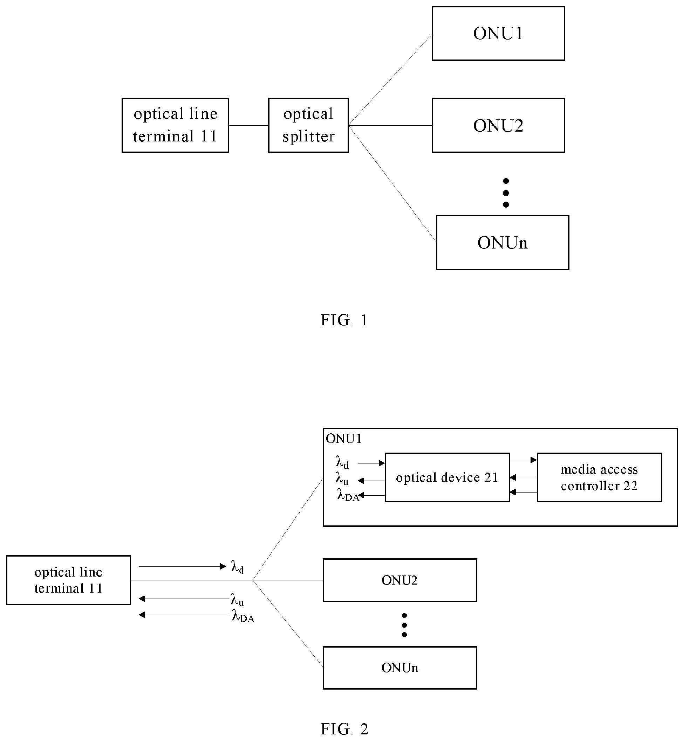

Fig. 1 is a schematic diagram of a topology structure of a passive optical network (PON) system according to an embodiment of the application. As shown in Fig. 1, the PON system may include an optical line terminal OLT 11 on the central office side, and one or more optical network units ONU on the user side, such as ONU1, ONU2, . . . ONUn, where n is an integer greater than or equal to 1. Between the OLT and the ONU, an Optical Distributed Network (ODN) may include passive devices such as optical fibers and optical splitters. Among them, the ODN is configured to provide the optical transmission medium for the physical connection between the OLT and the ONU. The PON system adopts a point-to-multipoint network topology structure. As an example, the OLT, as the central node of the passive optical network, can be set at the communication facility (e.g., the central office) of the access provider, and the ONU, as the user node, can be set at or near the place of the access user.

Fig. 2 shows a schematic diagram of a topology structure of an OLT and an ONU in a low-latency working mode according to an exemplary embodiment of the present application. The same reference numerals are used in Fig. 2 for structures that are the same as or equivalent to those in Fig. 1.

As shown in Fig. 2, the optical network unit ONU1 includes an optical device 21 and a media access controller 22. For other optical network units ONU2, ONU3, . . . ONUn in the optical network system, each optical network unit has the same or equivalent structure as ONU1. For example, each may include an optical device and a media access controller (not shown in the figure). Exemplarily, the optical device 21 may be configured to receive a downlink signal from the OLT and send an optical signal to the OLT; the media access controller 22 may be configured to perform frame parsing on the downlink signal sent by the OLT, and complete the framing and transmission of an uplink signal of the ONU.

As can be seen from Fig. 2, between the OLT and the ONU, one low-latency service downlink wavelength λ_{d}, one low-latency service uplink wavelength λᵤ, and one uplink wavelength for registration λ_{DA} are supported.

In the embodiment of the present application, if the ONU works in the low-latency working mode, one uplink wavelength, i.e., the uplink wavelength for registration λ_{DA}, can be used for completing the registration of the ONU, and the other wavelength, i.e., the low-latency service uplink wavelength λᵤ, is used for transmitting a low-latency service; if the ONU works in the non-low-latency working mode, it can complete the registration and transmit data on one of the uplink wavelengths, that is, the low-latency service uplink wavelength λᵤ. In the description of the following embodiments, the work type of the ONU described with reference to Fig. 2 may be referred to as a first type of low-latency type (it may be referred to as low-latency type A for short below).

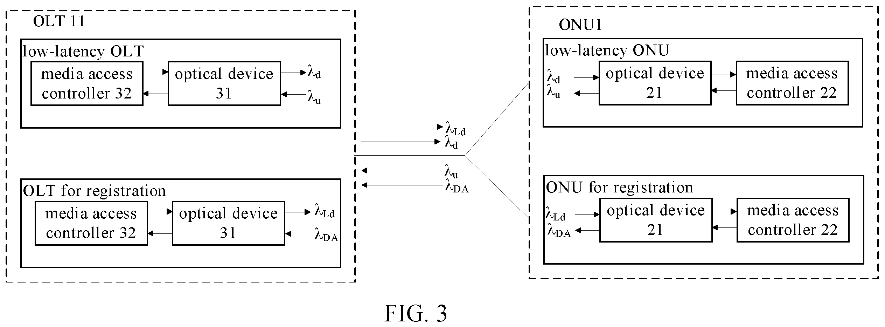

Fig. 3 is another schematic diagram of a topology structure of an OLT and an ONU in a low-latency working mode according to an exemplary embodiment of the present application. The same reference numerals are used in Fig. 3 for structures that are the same as or equivalent to those in Fig. 2.

As shown in Fig. 3, in the low-latency working mode, two downlink wavelengths and two uplink wavelengths are supported between OLT 11 and ONU1, of which a pair of wavelengths are the low-latency service downlink wavelength λ_{d} and the low-latency service uplink wavelength λᵤ; the other pair of wavelengths are the uplink wavelength for registration λ_{DA} and the downlink wavelength for registration λ_{Ld}.

In Fig. 3, the optical device 31 in the OLT 11 can be configured to receive an uplink signal from the ONU and send an optical signal to the ONU; the media access controller 32 can be configured to provide functions such as bit error detection, uplink signal frame parsing, etc. In an embodiment, the OLT performs registration operations for a corresponding ONU on two pairs of wavelengths, respectively. In a case that the registration operation for the corresponding ONU is performed on the uplink wavelength for registration λ_{DA} and the downlink wavelength for registration λ_{Ld}, the OLT may be referred to as a low-latency OLT. In a case that the registration operation for the corresponding ONU is performed on the low-latency service downlink wavelength λ_{d} and the low-latency service uplink wavelength λᵤ, the OLT may be referred to as an OLT for registration.

In the embodiment of the present application, the OLT performs registration without opening a window in the process of the registration on the low-latency service downlink wavelength λ_{d} and the low-latency service uplink wavelength λᵤ, to ensure that the activation process of the ONU will not affect the data transmission of other low-latency ONUs. In the description of the following embodiments, the work type of the ONU described with reference to Fig. 3 may be referred to as a second type of low-latency type (it may be referred to as the low-latency type B for short below).

In the embodiment of the present application, the registration process of the non-low-latency ONU may include the following operations S01 to S04.

S01, the ONU learning parameters such as an uplink wavelength burst of the ONU according to downlink data of the OLT.

S02, the ONU receiving a Serial Number (SN) request message sent by the OLT, and replying SN information to the OLT.

S03, the ONU receiving a ranging request sent by the OLT, and replying a ranging response to the OLT.

S04, the ONU receiving an equalization delay (EqD) sent by the OLT, and entering a working state.

In the above operations S01-S04, the wavelengths used in the registration process of the ONU of low-latency work type may be the low-latency service downlink wavelength λ_{d} and the low-latency service uplink wavelength λᵤ.

The method for registering an optical network unit in the embodiment of the present application can provide a registration process that supports the low-latency and non-low-latency ONUs, so that the ONUs can form a unified state transition for work.

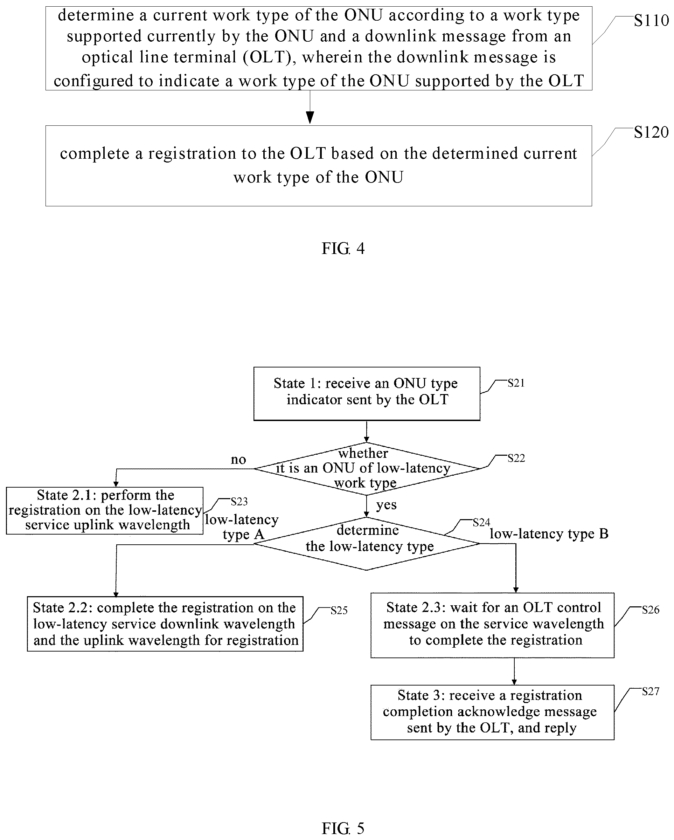

Fig. 4 is a schematic flowchart of a method for registering an optical network unit according to an embodiment of the present application. As shown in Fig. 4, in an embodiment, the method for registering an optical network unit may include the following operations S110 and S120.

S110, determining a current work type of the ONU according to a work type supported currently by the ONU and a downlink message from an optical line terminal (OLT), wherein the downlink message is configured to indicate a work type of the ONU supported by the OLT.

In operation S110, the work type of the ONU is selected from one of a non-low-latency work type and a low-latency work type.

S120, completing a registration to the OLT based on the determined current work type of the ONU.

After operation S120, when the registration to the OLT is completed, the ONU can perform data transmission with the OLT according to the determined work type.

According to the method for registering an optical network unit in the embodiment of the present application, the ONU is notified of the work type of the ONU supported by the OLT through the downlink message sent by the OLT, thereby ensuring that the ONU works in a corresponding mode according to its own capabilities and the requirements of the OLT.

In an embodiment, in a case that the ONU supports the low-latency service uplink wavelength, the low-latency service downlink wavelength and the uplink wavelength for registration, the work type of the ONU is a first type of low-latency type among the low-latency work types; in a case that the ONU supports the low-latency service uplink wavelength, the low-latency service downlink wavelength, the uplink wavelength for registration and the downlink wavelength for registration, the work type of the ONU is a second type of low-latency type among the low-latency work types, wherein, the first type of low-latency type and the second type of low-latency type are different low-latency work types.

As an example, the low-latency work type supported by the OLT includes at least one of the first type of low-latency type and the second type of low-latency type; in a case that the ONU supports the low-latency service uplink wavelength, the low-latency service downlink wavelength and the uplink wavelength for registration, the work types supported by the ONU itself include: the non-low-latency work type and the first type of low-latency type; in a case that the ONU supports the low-latency service uplink wavelength, the low-latency service downlink wavelength, the uplink wavelength for registration and the downlink wavelength for registration, the work types supported by the ONU itself include: the non-low-latency work type, the first type of low-latency type, and the second type of low-latency type.

In an embodiment, the downlink message in operation S110, which is configured to indicate the work type of the ONU supported by the OLT, may be a broadcast message, and may be sent through the downlink channel of a low-latency transmission channel, that is, sent on the low-latency service downlink wavelength.

In the embodiment of the present disclosure, the work type of the ONU supported by the OLT include a non-low-latency work type (which may also be referred to as a normal work type below) or a low-latency work type. The low-latency work type supported by the OLT is at least one of the first type of low-latency type and the second type of low-latency type.

That is to say, in a case that the OLT supports the low-latency work type, it may support the first type of low-latency type, or the second type of low-latency type, or both. It should be understood that, according to the varied wavelengths supported between the OLT and the ONU, the ONU of low-latency type may be extended to more low-latency types.

In an embodiment, operation S120 may include: in a case that a same work type is contained in the work type supported by the ONU and the work type of the ONU supported by the OLT, selecting, from the contained same work type, a work type as the current work type of the ONU.

Exemplarily, in a case that the work type of the ONU supported by the OLT is the non-low-latency work type, the ONU determines that the current work type of the ONU is the non-low-latency work type.

Exemplarily, in a case that the work type of the ONU supported by the OLT is the first type of low-latency type, and the work type supported by the ONU itself includes the first type of low-latency type, it is determined that the current work type of the ONU is the first type of low-latency type.

Exemplarily, in a case that the work type of the ONU supported by the OLT is the second type of low-latency type, and the work type supported by the ONU itself includes the second type of low-latency type, it is determined that the current work type of the ONU is the second type of low-latency type.

Exemplarily, in a case that the work type of the ONU supported by the OLT and the work type supported by the ONU itself both include the first type of low-latency type and the second type of low-latency type, the ONU selects the first type of low-latency type or the second type of low-latency type as the current work type of the ONU.

In this embodiment, after the ONU receives the message sending the work type of the ONU supported by the OLT, the ONU can further determine the work type of the ONU by comparing it with the work type supported by the ONU itself, and perform the process of a corresponding registration to the OLT according to the determined work type, so as to realize the state transition of the ONU under different work types.

Fig. 5 shows a schematic flowchart of an ONU state transition according to an embodiment of the present application. As shown in Fig. 5, in an embodiment, the process may include the following operations S21 to S27.

S21, as shown in "State 1" in Fig. 5, the ONU receiving a type indication message sent by the OLT.

In this operation, the type indication message is configured to indicate the work type of the ONU supported by the OLT.

S22, determining whether the ONU supported by the OLT is an ONU of low-latency work type.

S23, as shown in "State 2.1" in Fig. 5, if the OLT supports an ONU of non-low-latency work type, completing the registration on the low-latency service uplink wavelength.

S24, if the OLT supports an ONU of low-latency work type, further determining whether it supports the first type of low-latency type (i.e., low-latency type A) or the second type of low-latency type (i.e., low-latency type B).

S25, as shown in "State 2.2" in Fig. 5, if the OLT supports the low-latency type A, completing the registration of the ONU on the downlink service wavelength and the uplink wavelength for registration.

S26, as shown in "State 2.3" in Fig. 5, if the OLT supports the low-latency type B, waiting for a control message sent from the OLT on the service wavelength to complete the registration of the ONU.

S27, as shown in "State 3" in Fig. 5, after the registration is completed, if a registration completion acknowledge message sent by the OLT is received, making a reply to the registration completion acknowledge message.

In this embodiment, if the ONU supported by the OLT is of non-low-latency work type, that is, the normal work type, the ONU determines that it is of non-low-latency work type, and the ONU enters State 2.1. If it is of low-latency type A or low-latency type B, it determines that it is of such low-latency type. If it is of type A, the ONU enters State 2.2, and if it is of type B, the ONU enters State 2.3. If the OLT indicates that it supports both the low-latency type A and the low-latency type B, the ONU may choose to support the low-latency type A or the low-latency type B according to its own type, and complete the registration process according to respective types.

It can be known from the above description that, in an embodiment, completing the registration to the OLT based on the determined current work type of the ONU in the above operation S120 may include the following operations S131 to S133.

Operation S131, in response to a determination that the current work type of the ONU is the non-low-latency type, completing the registration to the OLT based on the low-latency service uplink wavelength and the low-latency service downlink wavelength supported by the ONU and between the ONU and the OLT.

Operation S132, in response to a determination that the current work type of the ONU is the first type of low-latency type, completing the registration to the OLT based on the low-latency service downlink wavelength and the uplink wavelength for registration supported by the ONU and between the ONU and the OLT.

Operation S133, in response to a determination that the current work type of the ONU is the second type of low-latency type, completing the registration to the OLT based on the low-latency service uplink wavelength, the low-latency service downlink wavelength, the uplink wavelength for registration and the downlink wavelength for registration supported by the ONU and between the ONU and the OLT

In an embodiment, if the ONU determines that the current work type of the ONU is the non-low-latency type, operation S131 may include the following operations S1311 to S1314.

S1311, according to received first parameter learning data borne on the low-latency service downlink wavelength, learning and obtaining parameter information of the low-latency service uplink wavelength.

S1312, receiving a serial number request message on the low-latency service downlink wavelength, and using the parameter information of the low-latency service uplink wavelength to reply serial number information of the ONU to the OLT on the low-latency service uplink wavelength.

S1313, using an identity information assignment message received on the low-latency service downlink wavelength as a ranging request, and sending a ranging response message of the ranging request on the low-latency service uplink wavelength.

S1314, receiving an equalization delay parameter borne on the low-latency service downlink wavelength, and entering a working state to complete the registration to the OLT.

In this embodiment, the ONU receives the ONU type indication sent by the OLT. If it is of non-low-latency type, the ONU learns parameters such as the uplink service wavelength burst of the ONU according to the data borne on the downlink service wavelength of the OLT; the ONU receives the serial number request sent by the OLT, and replies the SN information to the OLT; the ONU receives the broadcasted assignment ONU identifier (Assign ONU-ID) message sent by the OLT as a ranging request, and replies the ranging response to the OLT; the ONU receives the equalization delay sent by the OLT, and enters the working state. By the above operations, after the registration is completed, the ONU uses the uplink service wavelength for data transmission with the OLT.

In an embodiment, if the ONU determines that the current work type of the ONU is the first type of low-latency type, operation S132 may include the following operations S1321 to S1324.

S1321, according to second parameter learning data borne on the low-latency service downlink wavelength, learning and obtaining parameter information of the low-latency service uplink wavelength and parameter information of the uplink wavelength for registration.

S1322, receiving a serial number request message on the low-latency service downlink wavelength, and using the parameter information of the uplink wavelength for registration to reply serial number information of the ONU to the OLT on the uplink wavelength for registration.

S1323, receiving a ranging request through the low-latency service downlink wavelength, and sending a ranging response message of the ranging request on the uplink wavelength for registration.

S1324, receiving the equalization delay parameter borne on the low-latency service downlink wavelength, and the ONU entering the working state and completing the registration process.

In this embodiment, if the ONU determines that the current work type of the ONU is the first type of low-latency type (i.e., the low-latency type A), the ONU learns parameters such as the uplink service wavelength burst and the uplink registration wavelength burst of the ONU according to the data borne on the downlink service wavelength of the OLT; the ONU receives the SN request sent by the OLT, and selects the uplink wavelength for registration so as to reply the SN information to the OLT; the ONU receives the ranging request sent by the OLT, and selects the uplink wavelength for registration so as to reply the ranging response to the OLT; the ONU receives the equalization delay sent by the OLT, and enters the working state. By the above operations, after the registration is completed, the ONU uses the uplink service wavelength for data transmission with the OLT.

In an embodiment, if the ONU determines that the current work type of the ONU is the second type of low-latency type, operation S133 may include the following operations S1331 to S1334.

S1331, in a process of the registration to the OLT through the uplink wavelength for registration and the downlink wavelength for registration, sending serial number information of the ONU and a ranging response message to the OLT.

S1332, according to third parameter learning data borne on the low-latency service downlink wavelength, learning and obtaining parameter information of the low-latency service uplink wavelength.

S1333, receiving an identity information assignment message from the OLT through the low-latency service downlink wavelength, to acquire identity information of the ONU carried in the identity information assignment message.

S1334, receiving an equalization delay parameter borne on the low-latency service downlink wavelength, and entering a working state to complete the registration to the OLT.

In an embodiment, the OLT assigns the ONU the identity information in the PON system, such as ONU identifier information ONU-ID, or ONU logical link identifier information, or ONU physical identifier information.

In the above operation S1331, if the ONU determines that the current work type of the ONU is the second type of low-latency type (i.e., the low-latency type B), the OLT can obtain the serial number information and the ranging response message of the ONU from the uplink wavelength for registration in the process of the registration to the OLT by using the uplink wavelength for registration and the downlink wavelength for registration, match the ONU-ID according to the serial number information, obtain the equalization delay parameter according to the ranging response message, and send the ONU-ID and the equalization delay parameter to this ONU through the low-latency service downlink wavelength, so that the ONU completes the registration on the low-latency service uplink wavelength and the low-latency service downlink wavelength.

That is to say, corresponding to the second type of low-latency type (the low-latency type B), in the process of the registration using the pair of the uplink wavelength for registration and the downlink wavelength for registration, the traditional ONU obtains the serial number SN and the equalization delay EqD; according to the SN and the EqD, the OLT can obtain the ONU-ID and the equalization delay of the ONU on the registration channel (that is, the channel supporting the uplink wavelength for registration and the downlink wavelength for registration), and such information can be used for the registration of the ONU on the low-latency service channel (i.e. the channel supporting the low-latency service uplink wavelength and the low-latency service downlink wavelength).

In this embodiment, the ONU learns the parameters such as the uplink service wavelength burst of the ONU according to the data borne on the downlink service wavelength of the OLT; the ONU receives the unicast Assign ONU-ID message sent by the OLT; the ONU receives the equalization delay (EqD), and enters the working state. By the above operations, after the registration is completed, the ONU uses the uplink service wavelength for data transmission with the OLT.

In an embodiment, the downlink message is a type indication message received before the registration to the OLT; and, the type indication message is a Physical Layer Operations, Administration and Maintenance (PLOAM) message, and the work type of the ONU supported by the OLT is carried in a predetermined bit of the PLOAM message; or, the type indication message is a downlink frame sent by the OLT, and the work type of the ONU supported by the OLT is carried in a predetermined bit of a frame header of the downlink frame.

In an embodiment, in a case that the type indication message is the downlink frame sent by the OLT, the predetermined bit of the frame header of the downlink frame includes a predetermined bit of a downlink Physical Layer Synchronization Block (PSBd) in the frame header of the downlink frame, or a predetermined bit of a passive optical network identifier (PON-ID) field of the PSBd.

Table 1 below shows the definition of the message format of the PLOAM message by taking an example that the message of the work type of the ONU supported by the OLT is the PLOAM message.

**Table 1 PLOAM message of the ONU type supported by OLT**

| Octet | Content | Byte description (Description) |
|---|---|---|
| 1-2 | ONU identifier | Broadcasting message to all ONUs, ONU-ID=0x03FF. |
| 3 | 0x13 | Message type identifier "ONU type" |
| 4 | Message sequence number | Broadcasting PLOAM serial number as appropriate |
| 5 | 0000 0ddd | ddd: |
| | | 001: OLT supports low-latency type A. |
| | | 010: OLT supports low-latency type B. |
| | | 011: OLT supports low-latency types A and B. |
| | | 000: OLT supports normal work type (does not support ONU of low-latency type). |
| 6-40 | Padding | Set to 0x00 by the sender, and the receiver performs "don't care" processing. |
| 41-48 | MIC | Messages Integrity Check. |

It can be known from Table 1 that the work type of the ONU supported by the OLT is indicated by adding preset bits in the downlink PLOAM message. In the above embodiment, the type can also be indicated by adding corresponding bits in the frame header of the downlink frame. For example, 3 bits are added in the PSBd to indicate the ONUs of different work types, or 3 bits in the PON-ID field of the PSBd can be used for indicating the ONUs of different work types.

In this embodiment of the present application, the ONU of which work type supported by the OLT may be determined by receiving the SN request message. For example, in the SN request message, different Alloc-IDs may be used for identifying ONUs of different work types.

In an embodiment, the downlink message is a serial number request message received in the process of the registration to the OLT, and the low-latency work types supported by the OLT include at least one of the first type of low-latency type and the second type of low-latency work. The method for registering an optical network unit further includes the following operations S31 to S33.

S31, in a case that the received serial number request message is a message received on the low-latency service downlink wavelength, and an allocation identifier having a preset first allocation identifier value is carried in the received serial number request message, determining that the work type of the ONU supported by the OLT is the non-low-latency work type.

As an example, for example, an SN request message with an allocation identifier (Alloc-ID) of 1021 sent by the OLT on the low-latency downlink wavelength is received, it is indicated that the OLT supports the ONU of non-low-latency type.

S32, in a case that the received serial number request message is a message received on the low-latency service downlink wavelength, and an allocation identifier having a preset second allocation identifier value is carried in the received serial number request message, determining that the work type of the ONU supported by the OLT is the first type of low-latency type.

As an example, for example, an SN request message with an allocation identifier (Alloc-ID) of 1020 sent by the OLT on the low-latency downlink wavelength is received, it is indicated that the OLT supports the ONU of low-latency type A.

S33, in a case that the received serial number request message includes: a serial number request message received on a downlink wavelength for registration with an allocation identifier having the first allocation identifier value carried in the serial number request message, and a serial number request message received on the low-latency service downlink wavelength with an allocation identifier having the second allocation identifier value carried in the serial number request message, determining that work types of the ONU supported by the OLT are the first type of low-latency type and a second type of low-latency type. Wherein, the first type of low-latency type and the second type of low-latency type are two different low-latency work types among work types of the ONU.

As an example, in a case that the OLT sends an SN request message with an Alloc-ID of an ONU of non-low-latency type (for example, the Alloc-ID is 1021) on the downlink wavelength for registration, and at the same time sends an SN request with an Alloc-ID of 1020 on the low-latency wavelength, it is indicated that the OLT supports both the ONUs of low-latency type A and low-latency type B.

In some embodiments, after the ONU receives an SN request message with an Alloc-ID of an ONU of non-low-latency type sent on the downlink wavelength for registration, if the ONU does not receive an SN request message sent by the OLT on the low-latency downlink wavelength within a specified time period, then it is determined that the ONU type supported by the OLT is the second type of low-latency type.

That is to say, the ONU can distinguish different ONU types according to whether it receives the SN request message. In a case that the OLT sends an SN request message of the Alloc-ID of ONU of non-low-latency type on the downlink wavelength for registration, but does not send an SN request message on the low-latency wavelength, it is determined that it supports the ONU of type B. It should be noted that the Alloc-ID in the SN request will not be allocated to a specific ONU to avoid conflicts.

In this embodiment, the method for registering an ONU may include the following operations S41 to S43.

S41, the ONU learning parameters such as the uplink service wavelength burst of the ONU according to the data borne on the low-latency service downlink wavelength of the OLT.

S42, in a case that the ONU receives the SN request sent by the OLT, and the Alloc-ID carried in the SN request is a non-low-latency type, the ONU determining that the current work type of the ONU is a non-low-latency type, and replying the SN information to the OLT on the low-latency service uplinks wavelength.

In this operation, the registration process is completed by using the low-latency service uplink wavelength. Exemplarily: the ONU receives the broadcasted Assign ONU-ID message sent by the OLT as a ranging request, and replies a ranging response to the OLT; the ONU receives the equalization delay (EqD) sent by the OLT, and enters the working state; after the registration is completed, the uplink service wavelength is used for data transmission.

S43, in a case that the ONU receives the SN request sent by the OLT, and the Alloc-ID carried in the SN request is the first type of low-latency type (the low-latency type A), the ONU determining that the current work type of the ONU is the first type of low-latency type, and replying the SN information to OLT on the uplink wavelength for registration.

In this operation, the registration process is completed through the low-latency service downlink wavelength and the uplink wavelength for registration. Exemplarily, the ONU receives the ranging request sent by the OLT, and selects the uplink wavelength for registration to reply the ranging response to the OLT; the ONU receives the equalization delay parameter sent by the OLT, and enters the working state; after the registration is completed, the low-latency service uplink wavelength is used for data transmission.

In some embodiments, if the ONU does not receive a normal SN request (i.e., an SN request of non-low-latency) sent by the OLT on the low-latency service downlink wavelength, but directly receives the unicast Assign ONU-ID message sent by the OLT and at the same time receives an SN request of non-low-latency type is received on the downlink wavelength for registration, then it is indicated that the OLT supports Type B, and the ONU receives the equalization delay (EqD) sent by the OLT and enters the working state. After the registration is completed, the uplink service wavelength is used for data transmission.

In an embodiment, if the ONU receives a non-low-latency-type SN request on the downlink wavelength for registration, and receives a non-low-latency SN request sent by the OLT on the low-latency service downlink wavelength, it is indicated that the OLT supports both the first type of low-latency type (the low-latency type A) and the second type of low-latency type (Type B) simultaneously. If the ONU determines that its own work type does not support Type B, the ONU may not enter the working state according to the equalization delay parameter sent by the OLT.

That is to say, if the OLT supports the ONU indicating both the low-latency types A and B simultaneously, the ONU can determine its own ONU work type according to the relevant SN message and whether it receives a normal (non-low-latency) SN request message. The information of the relevant SN message includes, for example, wavelength information in the channel on which the SN message is received, and information such as the Alloc-ID carried in the SN message.

In some embodiments, if it is determined that the current work type of the ONU is the second type of low-latency type, then, after completing the registration to the OLT based on the determined current work type of the ONU, the method for registering an optical network unit further includes: S140, receiving a registration completion acknowledge message from the OLT, the registration completion acknowledge message being configured to confirm whether the ONU completes the registration normally; and S141, in response to the registration complete acknowledge message, sending an on-line acknowledge message to the OLT.

In this embodiment, after the ONU completes the registration, if it receives the confirmation sent by the OLT whether the registration is completed normally, it may make a reply to this message to confirm the completion of the registration.

In an embodiment, an on-line acknowledge message may have various forms. As an example, Table 2 shows the definition of the message format when the on-line acknowledge message is an Acknowledge message.

**Table 2 Acknowledge message format definition**

| Octet | Content | Byte description (Description) |
|---|---|---|
| 1-2 | ONU logic identifier | Sender identity information. |
| 3 | 0x09 | Message type identifier "Acknowledge message" |
| 4 | Message sequence number | The same as the downlink serial number; |
| | | if the ONU has no uplink message to send (Keep-alive mechanism from the OLT), the ONU sets the uplink serial number to 0. |
| 5 | Completion code (Completion_code) | 0-OK |
| | | 1: no message to send. |
| | | 2: busy, ready to reply. |
| | | 3: unknown message type. |
| | | 4: parameter error. |
| | | 5: processing error. |
| | | Other reserved values. |
| 6-40 | Padding | Set to 0x00 by the sender, and the receiver performs "don't care" processing. |
| 41-48 | MIC | Messages Integrity Check. |

It can be known from Table 2 that, if the ONU is successfully registered and makes a reply to the registration completion acknowledge message, in the Acknowledge message, the ONU-ID is the logical identifier assigned to the ONU to be registered, the SeqNo is 0, and the Completion code is 0. It should be understood that other forms of messages may also be used for the on-line acknowledge information, which will not be described repeatedly in this embodiment of the present disclosure.

In some embodiments, in a case that the OLT supports the second type of low-latency work type, when registration configuration information is issued after the trigger condition is met, it can be assumed that the ONU to be registered must have received the registration configuration information and completed the registration, so that the on-line acknowledge information is not required, and the OLT only needs to wait for the service information of the ONU to be registered after sending the registration configuration information.

According to the method for registering an optical network unit in the embodiment of the present application, by indicating the types supported by the OLT to the ONUs, it is ensured that the ONUs work in a corresponding mode according to their own capabilities and the requirements of the OLT, thereby ensuring that the ONUs can work in the corresponding low-latency mode, and the ONUs can thus form a unified state transition for work.

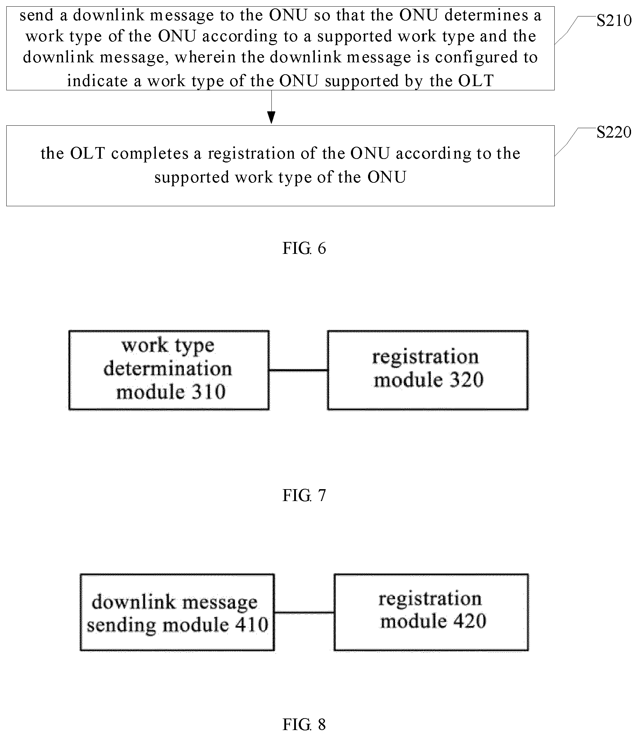

Fig. 6 is a schematic flowchart of a method for registering an optical network unit according to another embodiment of the present application. As shown in Fig. 6, the method for registering an optical network unit is applied to an optical line terminal (OLT), and includes the following operations S210 and S220.

S210, sending a downlink message to the ONU so that the ONU determines a work type of the ONU according to a supported work type and the downlink message, wherein the downlink message is configured to indicate a work type of the ONU supported by the OLT.

In this operation, the work type of the ONU is selected from one of a non-low-latency work type and a low-latency work type.

S220, the OLT completing a registration of the ONU according to the supported work type of the ONU.

In this embodiment, the OLT may classify the ONU, and notify the ONU of the work types supported by the OLT by sending a downlink message, thereby ensuring that the ONU works in a corresponding mode according to its own capabilities and the requirements of the OLT.

In an embodiment, in the operation S220, the OLT completing the registration of the ONU according to the supported work type of the ONU may include: S221, in a case that the work type of the ONU supported by the OLT is a non-low-latency work type, completing the registration of the ONU based on a low-latency service uplink wavelength and a low-latency service downlink wavelength between the ONU and the OLT; S222, in a case that the work type of the ONU supported by the OLT is a first type of low-latency type, completing the registration of the ONU based on the low-latency service downlink wavelength and an uplink wavelength for registration between the ONU and the OLT; and S223, in a case that the work type of the ONU supported by the OLT is a second type of low-latency type, completing the registration of the ONU based on the low-latency service uplink wavelength, the low-latency service downlink wavelength, the uplink wavelength for registration and a downlink wavelength for registration between the ONU and the OLT.

In an embodiment, the operation S221 may include: S2211, sending first parameter learning data on the low-latency service downlink wavelength, wherein the first parameter learning data contains parameter information of the low-latency service uplink wavelength; S2212, sending a serial number request message on the low-latency service downlink wavelength, and receiving serial number information replied by the ONU on the low-latency service uplink wavelength; S2213, broadcasting an identity information assignment message on the low-latency service downlink wavelength, and receiving a ranging response message on the low-latency service uplink wavelength; and S2214, sending an equalization delay parameter to the ONU through the low-latency service downlink wavelength to complete the registration of the ONU.

In an embodiment, the operation S222 may include: S2221, sending second parameter learning data on the low-latency service downlink wavelength, wherein the second parameter learning data contains parameter information of the low-latency service uplink wavelength and parameter information of the uplink wavelength for registration; S2222, sending a serial number request message on the low-latency service downlink wavelength, and receiving serial number information replied by the ONU on the uplink wavelength for registration; S2223, sending a ranging request to the ONU on the low-latency service downlink wavelength, and receiving a ranging response message of the ONU for the ranging request on the uplink wavelength for registration; and S2224, sending an equalization delay parameter to the ONU through the low-latency service downlink wavelength to complete the registration of the ONU.

In an embodiment, the operation S223 may include: S2231, in a process of the registration of the ONU through the uplink wavelength for registration and the downlink wavelength for registration, obtaining serial number information of the ONU and a ranging response message; S2232, assigning identity information for the ONU through the serial number information of the ONU, and generating an equalization delay parameter of the ONU; S2233, sending third parameter learning data on the low-latency service downlink wavelength, wherein the third parameter learning data contains parameter information of the low-latency service uplink wavelength; S2234, sending an identity information assignment message carrying the identity information on the low-latency service downlink wavelength; and S2235, sending the equalization delay parameter through the low-latency service downlink wavelength to complete the registration of the ONU.

In an embodiment, the type indication message is a physical layer operations, administration and maintenance (PLOAM) message, and the work type of the ONU supported by the OLT is carried in a predetermined bit of the PLOAM message; or, the type indication message is a downlink frame sent by the OLT, and the work type of the ONU supported by the OLT is carried in a predetermined bit of a frame header of the downlink frame.

In an embodiment, in a case that the type indication message is the downlink frame sent by the OLT, the predetermined bit of the frame header of the downlink frame includes: a predetermined bit of a downlink physical layer synchronization block (PSBd) in the frame header of the downlink frame, or a predetermined bit of a passive optical network identifier field of the PSBd.

In an embodiment, the downlink message may be a serial number request message sent in the registration process of the ONU, and the low-latency work type supported by the OLT includes at least one of the first type of low-latency type and the second type of low-latency type.

In this embodiment, in the above operation S210, when sending the downlink message to the optical network unit (ONU), the method for registering an optical network unit further includes: S211, in a case that the work type of the ONU supported by the OLT is the non-low-latency work type, sending the serial number request message on the low-latency service downlink wavelength, with an allocation identifier having a preset first allocation identifier value carried in the serial number request message; S212, in a case that the work type of the ONU supported by the OLT is the first type of low-latency type, sending the serial number request message on the low-latency service downlink wavelength, with an allocation identifier having a preset second allocation identifier value carried in the serial number request message; S213, in a case that work types of the ONU supported by the OLT include the first type of low-latency type and the second type of low-latency type, sending a serial number request message on the downlink wavelength for registration, with the allocation identifier having the first allocation identifier value carried in the serial number request message, and, sending a serial number request message on the low-latency service downlink wavelength, with the allocation identifier having the second allocation identifier value carried in the serial number request message; wherein the first type of low-latency type and the second type of low-latency type are two different low-latency work types among work types of the ONU.

In an embodiment, after completing the registration of the ONU, the method further includes: S230, sending a registration completion acknowledge message to the ONU, the registration completion acknowledge message being configured to confirm whether the ONU completes the registration normally; and S231, receiving an on-line acknowledge message from the ONU.

According to the method for registering an optical network unit in the embodiment of the present application, the OLT may classify the ONUs, and notify the ONUs of the supported work types by the OLT sending a downlink message, so as to support the low-latency operation mode of the ONUs, thereby ensuring that the ONUs can work in a corresponding low-latency mode and can thus form a unified state transition for work.

Fig. 7 shows a schematic structural diagram of an optical network unit according to an embodiment of the present application. As shown in Fig. 7, in an embodiment, the optical network unit includes the following modules.

A work type determination module 310 is configured to determine a current work type of the ONU according to a work type supported currently by the ONU and a downlink message from an optical line terminal (OLT), wherein the downlink message is configured to indicate a work type of the ONU supported by the OLT.

A registration module 320 is configured to complete a registration to the OLT based on the determined current work type of the ONU.

In an embodiment, the work type of the ONU is selected from one of a non-low-latency work type and a low-latency work type.

In an embodiment, in a case that the ONU supports the low-latency service uplink wavelength, the low-latency service downlink wavelength and the uplink wavelength for registration, the work type of the ONU is the first type of low-latency type among the low-latency work types; and in a case that the ONU supports the low-latency service uplink wavelength, the low-latency service downlink wavelength, the uplink wavelength for registration and the downlink wavelength for registration, the work type of the ONU is the second type of low-latency type among the low-latency work types, wherein, the first type of low-latency type and the second type of low-latency type are different low-latency work types.

In this embodiment, the low-latency work type supported by the OLT includes at least one of the first type of low-latency type and the second type of low-latency type; in a case that the ONU supports the low-latency service uplink wavelength, the low-latency service downlink wavelength and the uplink wavelength for registration, the work types supported by the ONU itself include: the non-low-latency work type and the first type of low-latency type; in a case that the ONU supports the low-latency service uplink wavelength, the low-latency service downlink wavelength, the uplink wavelength for registration and the downlink wavelength for registration, the work types supported by the ONU itself include: the non-low-latency work type, the first type of low-latency type, and the second type of low-latency type.

In an embodiment, the low-latency work type supported by the OLT is at least one of the first type of low-latency type and the second type of low-latency type; the work type determination module 310 may be further configured to: in a case that a same work type is contained in the work type supported by the ONU and the work type of the ONU supported by the OLT, select from the contained same work type a work type as the current work type of the ONU.

Exemplarily, the work type determination module 310 may include: a first type determination unit configured to, in a case that the work type of the ONU supported by the OLT is the non-low-latency work type, determine that the current work type of the ONU is the non-low-latency work type; a second type determination unit configured to, in a case that the work type of the ONU supported by the OLT is the first type of low-latency type and the work type supported by the ONU itself includes the first type of low-latency type, determine that the current work type of the ONU is the first type of low-latency type; a third type determination unit configured to, in a case that the work type of the ONU supported by the OLT is the second type of low-latency type and the work type supported by the ONU itself includes the second type of low-latency type, determine that the current work type of the ONU is the second type of low-latency type; and a fourth type determination unit configured to, in a case that the work type of the ONU supported by the OLT and the work type supported by the ONU itself both include the first type of low-latency type and the second type of low-latency type, select the first type of low-latency type or the second type of low-latency type as the current work type of the ONU.

In an embodiment, the registration module 320 may include: a non-low-latency-type registration unit configured to, in a case that the ONU determines that the current work type of the ONU is the non-low-latency type, complete the registration to the OLT based on the low-latency service uplink wavelength and the low-latency service downlink wavelength supported by the ONU and between the ONU and the OLT; a first-type low-latency-type registration unit configured to, in a case that the ONU determines that the current work type of the ONU is the first type of low-latency type, complete the registration to the OLT based on the low-latency service downlink wavelength and an uplink wavelength for registration supported by the ONU and between the ONU and the OLT; and, a second-type low-latency-type registration unit configured to, in a case that the ONU determines that the current work type of the ONU is the second type of low-latency type, complete the registration to the OLT based on the low-latency service uplink wavelength, the low-latency service downlink wavelength, the uplink wavelength for registration and a downlink wavelength for registration supported by the ONU and between the ONU and the OLT.

In an embodiment, the non-low-latency-type registration unit is configured to: according to received first parameter learning data borne on the low-latency service downlink wavelength, learn and obtain parameter information of the low-latency service uplink wavelength; receive a serial number request message on the low-latency service downlink wavelength, and use the parameter information of the low-latency service uplink wavelength to reply serial number information of the ONU to the OLT on the low-latency service uplink wavelength; use an identity information assignment message received on the low-latency service downlink wavelength as a ranging request, and send a ranging response message of the ranging request on the low-latency service uplink wavelength; receive an equalization delay parameter borne on the low-latency service downlink wavelength, and enter the working state to complete the registration to the OLT.

In an embodiment, the first-type low-latency-type registration unit is configured to: according to second parameter learning data borne on the low-latency service downlink wavelength, learn and obtain parameter information of the low-latency service uplink wavelength and parameter information of the uplink wavelength for registration; receive a serial number request message on the low-latency service downlink wavelength, and use the parameter information of the uplink wavelength for registration to reply serial number information of the ONU to the OLT on the uplink wavelength for registration; receive a ranging request through the low-latency service downlink wavelength, and send a ranging response message of the ranging request on the uplink wavelength for registration; receive the equalization delay parameter borne on the low-latency service downlink wavelength, and the ONU enters the working state and completes the registration process.

In an embodiment, the second-type low-latency-type registration unit is configured to: in a process of the registration to the OLT through the uplink wavelength for registration and the downlink wavelength for registration, send serial number information of the ONU and a ranging response message to the OLT; according to third parameter learning data borne on the low-latency service downlink wavelength, learn and obtain parameter information of the low-latency service uplink wavelength; receive an identity information assignment message from the OLT through the low-latency service downlink wavelength, to acquire identity information of the ONU carried in the identity information assignment message; receive an equalization delay parameter borne on the low-latency service downlink wavelength, and enter a working state to complete the registration to the OLT.

In an embodiment, the downlink message is a type indication message received before the registration to the OLT; and, the type indication message is a physical layer operations, administration and maintenance (PLOAM) message, and the work type of the ONU supported by the OLT is carried in a predetermined bit of the PLOAM message; or, the type indication message is a downlink frame sent by the OLT, and the work type of the ONU supported by the OLT is carried in a predetermined bit of a frame header of the downlink frame.

In an embodiment, in a case that the type indication message is the downlink frame sent by the OLT, the predetermined bit of the frame header of the downlink frame includes: a predetermined bit of a downlink physical layer synchronization block (PSBd) in the frame header of the downlink frame, or a predetermined bit of a passive optical network identifier field of the PSBd.

In an embodiment, the downlink message is a serial number request message received in a process of the registration to the OLT, and the low-latency work type supported by the OLT includes at least one of the first type of low-latency type and the second type of low-latency type.

In this embodiment, in the ONU, the work type determination module 310 may further includes: a fifth type determination unit configured to, in a case that the received serial number request message is a message received on a low-latency service downlink wavelength, and an allocation identifier having a preset first allocation identifier value is carried in the received serial number request message, determine that the work type of the ONU supported by the OLT is a non-low-latency work type; a sixth type determination unit configured to, in a case that the received serial number request message is a message received on the low-latency service downlink wavelength, and an allocation identifier having a preset second allocation identifier value is carried in the received serial number request message, determine that the work type of the ONU supported by the OLT is a first type of low-latency type; a seventh type determination unit configured to, in a case that the received serial number request message includes a serial number request message received on a downlink wavelength for registration with an allocation identifier having the first allocation identifier value carried in the serial number request message, and a serial number request message received on the low-latency service downlink wavelength with an allocation identifier having the second allocation identifier value carried in the serial number request message, determine that work types of the ONU supported by the OLT are the first type of low-latency type and a second type of low-latency type.

In an embodiment, the ONU may further include: an acknowledge message reception module configured to, in a case of determining that the current work type of the ONU is a second type of low-latency type, after completing the registration to the OLT based on the determined current work type of the ONU, receive a registration completion acknowledge message from the OLT, the registration completion acknowledge message being configured to confirm whether the ONU completes the registration normally; and an acknowledge message response module configured to, in response to the registration complete acknowledge message, send an on-line acknowledge message to the OLT.

According to the optical network unit in the embodiment of the present application, the ONU is notified of the ONU types supported by the OLT according to the received downlink message sent by the OLT, thereby ensuring that the ONU works in a corresponding mode according to its own capabilities and the requirements of the OLT.

Fig. 8 shows a schematic structural diagram of an optical line terminal according to an embodiment of the present application. As shown in Fig. 8, in an embodiment, the optical line terminal includes the following modules.

A downlink message sending module 410 is configured to send a downlink message to an ONU so that the ONU determines a work type of the ONU according to a supported work type and the downlink message, wherein the downlink message is configured to indicate a work type of the ONU supported by the OLT.

A registration module 420 is configured to complete a registration of the ONU according to the supported work type of the ONU.

In an embodiment, the work type of the ONU is selected from one of a non-low-latency work type and a low-latency work type.

In an embodiment, the registration module 420 may include: a non-low-latency-type registration unit configured to, in a case that the work type of the ONU supported by the OLT is a non-low-latency work type, complete the registration of the ONU based on a low-latency service uplink wavelength and a low-latency service downlink wavelength between the ONU and the OLT; a first-type low-latency registration unit configured to, in a case that the work type of the ONU supported by the OLT is a first type of low-latency type, complete the registration of the ONU based on the low-latency service downlink wavelength and an uplink wavelength for registration between the ONU and the OLT; and a second-type low-latency registration unit configured to, in a case that the work type of the ONU supported by the OLT is a second type of low-latency type, complete the registration of the ONU based on the low-latency service uplink wavelength, the low-latency service downlink wavelength, the uplink wavelength for registration and a downlink wavelength for registration between the ONU and the OLT.

In an embodiment, the non-low-latency-type registration unit is configured to: send first parameter learning data on the low-latency service downlink wavelength, wherein the first parameter learning data contains parameter information of the low-latency service uplink wavelength; send a serial number request message on the low-latency service downlink wavelength, and receive serial number information replied by the ONU on the low-latency service uplink wavelength; broadcast an identity information assignment message on the low-latency service downlink wavelength, and receive a ranging response message on the low-latency service uplink wavelength; and send an equalization delay parameter to the ONU through the low-latency service downlink wavelength to complete the registration of the ONU.

In an embodiment, the first-type low-latency registration unit is configured to: send second parameter learning data on the low-latency service downlink wavelength, wherein the second parameter learning data contains parameter information of the low-latency service uplink wavelength and parameter information of the uplink wavelength for registration; send a serial number request message on the low-latency service downlink wavelength, and receive serial number information replied by the ONU on the uplink wavelength for registration; send a ranging request to the ONU on the low-latency service downlink wavelength, and receive a ranging response message of the ONU for the ranging request on the uplink wavelength for registration; and send an equalization delay parameter to the ONU through the low-latency service downlink wavelength to complete the registration of the ONU.

In an embodiment, the second-type low-latency registration unit is configured to: in a process of the registration of the ONU through the uplink wavelength for registration and the downlink wavelength for registration, obtain serial number information of the ONU and a ranging response message; assign identity information for the ONU through the serial number information of the ONU, and generate an equalization delay parameter of the ONU; send third parameter learning data on the low-latency service downlink wavelength, wherein the third parameter learning data contains parameter information of the low-latency service uplink wavelength; send an identity information assignment message carrying the identity information on the low-latency service downlink wavelength; and send the equalization delay parameter through the low-latency service downlink wavelength to complete the registration of the ONU.

In an embodiment, the downlink message may be a type indication message sent to the ONU before starting the registration of the ONU; wherein, the type indication message is a physical layer operations, administration and maintenance (PLOAM) message, and the work type of the ONU supported by the OLT is carried in a predetermined bit of the PLOAM message; or, the type indication message is a downlink frame sent by the OLT, and the work type of the ONU supported by the OLT is carried in a predetermined bit of a frame header of the downlink frame.

In an embodiment, in a case that the type indication message is the downlink frame sent by the OLT, the predetermined bit of the frame header of the downlink frame includes: a predetermined bit of a downlink physical layer synchronization block (PSBd) in the frame header of the downlink frame, or a predetermined bit of a passive optical network identifier field of the PSBd.

In an embodiment, the downlink message is a serial number request message sent in a process of the registration of the ONU, and the low-latency work type supported by the OLT includes at least one of the first type of low-latency type and the second type of low-latency type; the downlink message sending module 410 may include: a first information carrying unit configured to, in a case that the work type of the ONU supported by the OLT is a non-low-latency work type, send the serial number request message on a low-latency service downlink wavelength, with an allocation identifier having a preset first allocation identifier value carried in the serial number request message; a second information carrying unit configured to, in a case that the work type of the ONU supported by the OLT is a first type of low-latency type, send the serial number request message on the low-latency service downlink wavelength, with an allocation identifier having a preset second allocation identifier value carried in the serial number request message; a third information carrying unit configured to, in a case that the work types of the ONU supported by the OLT are the first type of low-latency type and a second type of low-latency type, send a serial number request message on a downlink wavelength for registration, with the allocation identifier having the first allocation identifier value carried in the serial number request message, and, send a serial number request message on the low-latency service downlink wavelength, with the allocation identifier having the second allocation identifier value carried in the serial number request message; wherein the first type of low-latency type and the second type of low-latency type are two different low-latency work types among work types of the ONU.

In an embodiment, the optical line terminal may further include: an acknowledge message sending module configured to, in a case that the work type of the ONU supported by the OLT is a second type of low-latency type, after the OLT completes the registration of the ONU according to the supported work type of the ONU, send a registration completion acknowledge message to the ONU, the registration completion acknowledge message being configured to confirm whether the ONU completes the registration normally; and an acknowledge message reception unit configured to receive an on-line acknowledge message from the ONU.

According to the optical line terminal in the embodiment of the present application, by classifying the ONUs, and notifying of the supported work types of the ONU using a downlink message, the low-latency operation mode of the ONUs is supported, thereby ensuring that the ONUs can work in a corresponding low-latency mode and can thus form a unified state transition for work.

It should be noted that the present application is not limited to the specific configurations and processes described in the above embodiments and shown in the figures. For the convenience and brevity of the description, the detailed description of the known method is omitted here, and the specific working processes of the systems, modules and units described above may refer to the corresponding processes in the foregoing method embodiments, which will not be repeated here.

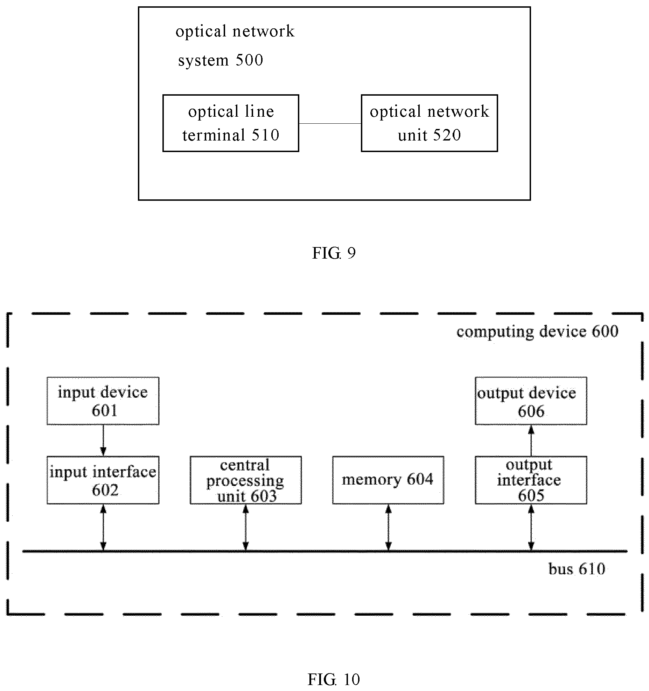

Fig. 9 shows a schematic structural diagram of an optical network system according to an embodiment of the present application. As shown in Fig. 9, in an embodiment, the optical network system 500 may include an optical line terminal (OLT) 510 and an optical network unit (ONU) 520.

The OLT 510 is configured to send a downlink message to the ONU, wherein the downlink message is configured to indicate a work type of the ONU supported by the OLT; and the ONU 520 is configured to determine a current work type of the ONU according to a work type supported currently by the ONU and the downlink message from the OLT, and complete a registration to the OLT based on the determined current work type of the ONU.

In the optical network system according to the embodiment of the present application, the OLT may send a downlink message to indicate the supported work type of the ONU, and the ONU determines the current work type of the ONU according to the work type supported by itself and the work type of the ONU supported by the OLT, and performs the registration and data transmission to the OLT according to the determined current work type of the ONU. Therefore, it is ensured that the ONUs can work in a non-low-latency working mode or a corresponding low-latency mode, so that the ONUs can form a unified state transition for work.

For the specific working process of the optical line terminal in the embodiment of the present application, reference may be made to the corresponding working process of the OLT in the embodiments of the methods for registering an optical network unit described above in conjunction with the embodiments; and for the specific working process of the ONU in the embodiment of the present application, reference may be made to the corresponding working process of the optical network unit in the embodiments of the methods for registering an optical network unit described in the above embodiments.

It should be clear that the present application is not limited to the specific configurations and processes described in the above embodiments and shown in the figures. For the convenience and brevity of the description, the detailed description of the known method is omitted here, and the specific working processes of the systems, modules and units described above may refer to the corresponding processes in the foregoing method embodiments, which will not be repeated here.

Fig. 10 is a structural diagram illustrating an exemplary hardware architecture of a computing device according to an embodiment of the present application. As shown in Fig. 10, a computing device 600 includes an input device 601, an input interface 602, a central processing unit 603, a memory 604, an output interface 605, and an output device 606. Among them, the input interface 602, the central processing unit 603, the memory 604 and the output interface 605 are connected to each other through a bus 610, and the input device 601 and the output device 606 are connected to the bus 610 through the input interface 602 and the output interface 605, respectively, and thus to other components of the computing device 600.

The input device 601 receives input information from the outside, and transmits the input information to the central processing unit 603 through the input interface 602; the central processing unit 603 processes the input information based on the computer-executable instructions stored in the memory 604 to generate output information, temporarily or permanently store the output information in the memory 604, and then transmit the output information to the output device 606 through the output interface 605; the output device 606 outputs the output information to the outside of the computing device 600 for the user to use.

In an embodiment, the computing device 600 shown in Fig. 10 may be implemented as a system for registering an optical network unit, and the system for registering an optical network unit may include: a memory configured to store a program; a processor configured to run the program stored in the memory to perform any one of the methods for registering an optical network unit described in the above embodiments.

The above descriptions are merely exemplary embodiments of the present application, and are not intended to limit the protection scope of the present application. It will be understood by those skilled in the art that the term user terminal encompasses any suitable type of wireless user equipment such as a mobile telephone, a portable data processing device, a portable web browser or an on-vehicle mobile station.

In general, the various embodiments of the present application may be implemented in hardware or special purpose circuits, software, logic, or any combination thereof. For example, some aspects may be implemented in hardware, while other aspects may be implemented in firmware or software that may be executed by a controller, microprocessor or other computing device, although the application is not limited thereto.

The embodiments of the present application may be implemented by the execution of computer program instructions by a data processor of a mobile device, e.g., in a processor entity, or by hardware, or by a combination of software and hardware. The computer program instructions may be assembly instructions, instruction set architecture (ISA) instructions, machine instructions, machine-dependent instructions, microcodes, firmware instructions, state setting data, or source codes or object codes written in any combination of one or more programming languages.

The block diagrams of any logic flow in the figures of the present application may represent program operations, or may represent interconnected logic circuits, modules and functions, or may represent a combination of program operations and logic circuits, modules and functions. The computer programs can be stored on a memory. The memory may be of any type suitable for the local technical environment and may be implemented using any suitable data storage technology such as, but not limited to, read only memory (ROM), random access memory (RAM), optical memory devices and systems (Digital Versatile Discs (DVD) or CD disc), etc. The computer-readable media may include non-transitory storage media. The data processor may be of any type suitable for the local technical environment, such as, but not limited to, a general-purpose computer, a special purpose computer, a microprocessor, a digital signal processor (DSP), an application specific integrated circuit (ASIC), a programmable logic device (FGPA) and a processor based on multi-core processor architecture.

The foregoing has provided a detailed description of exemplary embodiments of the present application, by way of illustrative and non-limiting examples. However, when considered in conjunction with the accompanying drawings and claims, various modifications and adjustments to the above embodiments will be apparent to those skilled in the art without departing from the scope of the present application. Accordingly, the proper scope of this application will be determined with reference to the claims.

## Claims

1. A method for registering an optical network unit, ONU, applied to the ONU, comprising:
determining (S110) a current work type of the ONU according to a work type supported currently by the ONU and a downlink message from an optical line terminal, OLT, wherein the downlink message is configured to indicate a work type of the ONU supported by the OLT; and
completing (S120) a registration to the OLT based on the determined current work type of the ONU,
wherein the work type of the ONU is selected from one of a non-low-latency work type and a low-latency work type, and
wherein,
in a case that the ONU supports a low-latency service uplink wavelength, a low-latency service downlink wavelength and an uplink wavelength for registration, the work type of the ONU is a first type of low-latency type among low-latency work types; and in a case that the ONU supports the low-latency service uplink wavelength, the low-latency service downlink wavelength, the uplink wavelength for registration and a downlink wavelength for registration, the work type of the ONU is a second type of low-latency type among the low-latency work types, wherein, the first type of low-latency type and the second type of low-latency type are different low-latency work types.

2. The method of claim 1, wherein,
determining the current work type of the ONU according to the work type supported currently by the ONU and the downlink message from the optical line terminal, OLT, comprises: in a case that a same work type is contained in the work type supported by the ONU and the work type of the ONU supported by the OLT, selecting, from the contained same work type, a work type as the current work type of the ONU.

3. The method of claim 1, wherein completing (S120) the registration to the OLT based on the determined current work type of the ONU comprises:
in response to a determination that the current work type of the ONU is a non-low-latency type, completing the registration to the OLT based on the low-latency service uplink wavelength and the low-latency service downlink wavelength supported by the ONU and between the ONU and the OLT;
in response to a determination that the current work type of the ONU is the first type of low-latency type, completing the registration to the OLT based on the low-latency service downlink wavelength and the uplink wavelength for registration supported by the ONU and between the ONU and the OLT; and
in response to a determination that the current work type of the ONU is the second type of low-latency type, completing the registration to the OLT based on the low-latency service uplink wavelength, the low-latency service downlink wavelength, the uplink wavelength for registration and the downlink wavelength for registration supported by the ONU and between the ONU and the OLT.

4. The method of claim 3, wherein completing the registration to the OLT based on the low-latency service uplink wavelength and the low-latency service downlink wavelength supported by the ONU and between the ONU and the OLT comprises: receiving a serial number request message on the low-latency service downlink wavelength, and replying serial number information of the ONU to the OLT on the low-latency service uplink wavelength; using an identity information assignment message received on the low-latency service downlink wavelength as a ranging request, and sending a ranging response message of the ranging request on the low-latency service uplink wavelength; and receiving an equalization delay parameter borne on the low-latency service downlink wavelength, and entering a working state to complete the registration to the OLT,
or, wherein completing the registration to the OLT based on the low-latency service downlink wavelength and the uplink wavelength for registration supported by the ONU and between the ONU and the OLT comprises: receiving a serial number request message on the low-latency service downlink wavelength, and replying serial number information of the ONU to the OLT on the uplink wavelength for registration; receiving a ranging request through the low-latency service downlink wavelength, and sending a ranging response message of the ranging request on the uplink wavelength for registration; and receiving an equalization delay parameter borne on the low-latency service downlink wavelength, and the ONU entering a working state to complete the registration process,
or, wherein completing the registration to the OLT based on the low-latency service uplink wavelength, the low-latency service downlink wavelength, the uplink wavelength for registration and the downlink wavelength for registration supported by the ONU and between the ONU and the OLT comprises: in a process of the registration to the OLT through the uplink wavelength for registration and the downlink wavelength for registration, sending serial number information of the ONU and a ranging response message to the OLT; receiving an identity information assignment message from the OLT through the low-latency service downlink wavelength, to acquire identity information of the ONU carried in the identity information assignment message; and receiving an equalization delay parameter borne on the low-latency service downlink wavelength, and entering a working state to complete the registration to the OLT.

5. The method of claim 1, wherein,
the downlink message is a type indication message received before the registration to the OLT; and,
the type indication message is a physical layer operations, administration and maintenance, PLOAM, message, and the work type of the ONU supported by the OLT is carried in a predetermined bit of the PLOAM message; or, the type indication message is a downlink frame sent by the OLT, and the work type of the ONU supported by the OLT is carried in a predetermined bit of a frame header of the downlink frame,
or, wherein, the type indication message is a downlink frame sent by the OLT, the work type of the ONU supported by the OLT is carried in a predetermined bit of a frame header of the downlink frame, and the predetermined bit of the frame header of the downlink frame comprises: a predetermined bit of a downlink physical layer synchronization block, PSBd, in the frame header of the downlink frame, or a predetermined bit of a passive optical network identifier field of the PSBd,
or, wherein the downlink message is a serial number request message received in a process of the registration to the OLT; the method further comprises: in a case that the received serial number request message is a message received on the low-latency service downlink wavelength, and an allocation identifier having a preset first allocation identifier value is carried in the received serial number request message, determining that the work type of the ONU supported by the OLT is the non-low-latency work type; in a case that the received serial number request message is a message received on the low-latency service downlink wavelength, and an allocation identifier having a preset second allocation identifier value is carried in the received serial number request message, determining that the work type of the ONU supported by the OLT is the first type of low-latency type; in a case that the received serial number request message comprises a serial number request message received on the downlink wavelength for registration with an allocation identifier having the first allocation identifier value carried in the serial number request message, and a serial number request message received on the low-latency service downlink wavelength with an allocation identifier having the second allocation identifier value carried in the serial number request message, determining that work types of the ONU supported by the OLT are the first type of low-latency type and the second type of low-latency type;
or, wherein, in a case of determining that the current work type of the ONU is the second type of low-latency type, after completing the registration to the OLT based on the determined current work type of the ONU, the method further comprises: receiving a registration completion acknowledge message from the OLT, the registration completion acknowledge message being configured to confirm whether the ONU completes the registration normally; and in response to the registration complete acknowledge message, sending an on-line acknowledge message to the OLT.

6. A method for registering an optical network unit, ONU, applied to an optical line terminal, OLT, comprising:
sending (S210) a downlink message to the ONU so that the ONU determines a work type of the ONU according to a supported work type and the downlink message, wherein the downlink message is configured to indicate a work type of the ONU supported by the OLT; and
the OLT completing (S220) a registration of the ONU according to the supported work type of the ONU,
wherein the work type of the ONU is selected from one of a non-low-latency work type and a low-latency work type,
wherein,
in a case that the ONU supports a low-latency service uplink wavelength, a low-latency service downlink wavelength and an uplink wavelength for registration, the work type of the ONU is a first type of low-latency type among low-latency work types; and in a case that the ONU supports the low-latency service uplink wavelength, the low-latency service downlink wavelength, the uplink wavelength for registration and a downlink wavelength for registration, the work type of the ONU is a second type of low-latency type among the low-latency work types, wherein, the first type of low-latency type and the second type of low-latency type are different low-latency work types.

7. The method of claim 6, wherein the OLT completing (S220) the registration of the ONU according to the supported work type of the ONU comprises:
in a case that the work type of the ONU supported by the OLT is the non-low-latency work type, completing the registration of the ONU based on the low-latency service uplink wavelength and the low-latency service downlink wavelength between the ONU and the OLT;
in a case that the work type of the ONU supported by the OLT is the first type of low-latency type, completing the registration of the ONU based on the low-latency service downlink wavelength and the uplink wavelength for registration between the ONU and the OLT; and
in a case that the work type of the ONU supported by the OLT is the second type of low-latency type, completing the registration of the ONU based on the low-latency service uplink wavelength, the low-latency service downlink wavelength, the uplink wavelength for registration and the downlink wavelength for registration between the ONU and the OLT.

8. The method of claim 7, wherein completing the registration of the ONU based on the low-latency service uplink wavelength and the low-latency service downlink wavelength between the ONU and the OLT comprises:
sending a serial number request message on the low-latency service downlink wavelength, and receiving serial number information replied by the ONU on the low-latency service uplink wavelength; broadcasting an identity information assignment message on the low-latency service downlink wavelength, and
receiving a ranging response message on the low-latency service uplink wavelength; and sending an equalization delay parameter to the ONU through the low-latency service downlink wavelength to complete the registration of the ONU,
or, wherein completing the registration of the ONU based on the low-latency service downlink wavelength and the uplink wavelength for registration between the ONU and the OLT comprises: sending a serial number request message on the low-latency service downlink wavelength, and receiving serial number information replied by the ONU on the uplink wavelength for registration; sending a ranging request to the ONU on the low-latency service downlink wavelength, and receiving a ranging response message of the ONU for the ranging request on the uplink wavelength for registration; and sending an equalization delay parameter to the ONU through the low-latency service downlink wavelength to complete the registration of the ONU,
or, wherein completing the registration of the ONU based on the low-latency service uplink wavelength, the low-latency service downlink wavelength, the uplink wavelength for registration and the downlink wavelength for registration between the ONU and the OLT comprises: in a process of the registration of the ONU through the uplink wavelength for registration and the downlink wavelength for registration, obtaining serial number information of the ONU and a ranging response message; assigning identity information for the ONU through the serial number information of the ONU, and generating an equalization delay parameter of the ONU; sending an identity information assignment message carrying the identity information on the low-latency service downlink wavelength; and sending the equalization delay parameter through the low-latency service downlink wavelength to complete the registration of the ONU.

9. The method of claim 6, wherein,
the downlink message is a type indication message sent to the ONU before starting the registration of the ONU; wherein,
the type indication message is a physical layer operations, administration and maintenance, PLOAM, message, and the work type of the ONU supported by the OLT is carried in a predetermined bit of the PLOAM message; or, the type indication message is a downlink frame sent by the OLT, and the work type of the ONU supported by the OLT is carried in a predetermined bit of a frame header of the downlink frame,
or, wherein, the type indication message is a downlink frame sent by the OLT, the work type of the ONU supported by the OLT is carried in a predetermined bit of a frame header of the downlink frame, and the predetermined bit of the frame header of the downlink frame comprises: a predetermined bit of a downlink physical layer synchronization block, PSBd, in the frame header of the downlink frame, or a predetermined bit of a passive optical network identifier field of the PSBd,
or, wherein the downlink message is a serial number request message sent in a process of completing the registration of the ONU; the method further comprises: in a case that the work type of the ONU supported by the OLT is the non-low-latency work type, sending the serial number request message on the low-latency service downlink wavelength, with an allocation identifier having a preset first allocation identifier value carried in the serial number request message; in a case that the work type of the ONU supported by the OLT is the first type of low-latency type, sending the serial number request message on the low-latency service downlink wavelength, with an allocation identifier having a preset second allocation identifier value carried in the serial number request message; in a case that the work type of the ONU supported by the OLT comprises the first type of low-latency type and the second type of low-latency type, sending a serial number request message on the downlink wavelength for registration, with the allocation identifier having the first allocation identifier value carried in the serial number request message, and, sending a serial number request message on the low-latency service downlink wavelength, with the allocation identifier having the second allocation identifier value carried in the serial number request message; wherein the first type of low-latency type and the second type of low-latency type are two different low-latency work types among work types of the ONU,
or, wherein, in a case that the work type of the ONU supported by the OLT is the second type of low-latency type, after the OLT completes the registration of the ONU according to the supported work type of the ONU, the method further comprises: sending a registration completion acknowledge message to the ONU, the registration completion acknowledge message being configured to confirm whether the ONU completes the registration normally; and receiving an on-line acknowledge message from the ONU.

10. An optical network unit, ONU, comprising:
a work type determination module (310) configured to determine a current work type of the ONU according to a work type supported currently by the ONU and a downlink message from an optical line terminal, OLT, wherein the downlink message is configured to indicate a work type of the ONU supported by the OLT; and
a registration module (320) configured to complete a registration to the OLT based on the determined current work type of the ONU,
wherein the work type of the ONU is selected from one of a non-low-latency work type and a low-latency work type,
wherein,
in a case that the ONU supports a low-latency service uplink wavelength, a low-latency service downlink wavelength and an uplink wavelength for registration, the work type of the ONU is a first type of low-latency type among low-latency work types; and in a case that the ONU supports the low-latency service uplink wavelength, the low-latency service downlink wavelength, the uplink wavelength for registration and a downlink wavelength for registration, the work type of the ONU is a second type of low-latency type among the low-latency work types, wherein, the first type of low-latency type and the second type of low-latency type are different low-latency work types.

11. An optical line terminal, OLT, comprising:
a downlink message sending module (410) configured to send a downlink message to an ONU so that the ONU determines a work type of the ONU according to a supported work type and the downlink message, wherein the downlink message is configured to indicate a work type of the ONU supported by the OLT; and
a registration module (420) configured to complete a registration of the ONU according to the supported work type of the ONU,
wherein the work type of the ONU is selected from one of a non-low-latency work type and a low-latency work type,
wherein,
in a case that the ONU supports a low-latency service uplink wavelength, a low-latency service downlink wavelength and an uplink wavelength for registration, the work type of the ONU is a first type of low-latency type among low-latency work types; and in a case that the ONU supports the low-latency service uplink wavelength, the low-latency service downlink wavelength, the uplink wavelength for registration and a downlink wavelength for registration, the work type of the ONU is a second type of low-latency type among the low-latency work types, wherein, the first type of low-latency type and the second type of low-latency type are different low-latency work types.

12. An optical network system (500), comprising an optical line terminal, OLT, (510) and an optical network unit, ONU, (520) wherein,
the OLT (510) is configured to send a downlink message to the ONU (520), wherein the downlink message is configured to indicate a work type of the ONU (520) supported by the OLT (510); and
the ONU (520) is configured to determine a current work type of the ONU (520) according to a work type supported currently by the ONU (520) and the downlink message from the OLT (510), and complete a registration to the OLT (510) based on the determined current work type of the ONU (520),
wherein the work type of the ONU is selected from one of a non-low-latency work type and a low-latency work type,
wherein,
in a case that the ONU supports a low-latency service uplink wavelength, a low-latency service downlink wavelength and an uplink wavelength for registration, the work type of the ONU is a first type of low-latency type among low-latency work types; and in a case that the ONU supports the low-latency service uplink wavelength, the low-latency service downlink wavelength, the uplink wavelength for registration and a downlink wavelength for registration, the work type of the ONU is a second type of low-latency type among the low-latency work types, wherein, the first type of low-latency type and the second type of low-latency type are different low-latency work types.

13. A system for registering an optical network unit, ONU, comprising a memory and a processor; wherein
the memory is configured to store executable program codes; and
the processor is configured to read the executable program codes stored in the memory to execute the method for registering an optical network unit of any one of claims 1 to 5 or any one of claims 6 to 9.

14. A storage medium storing a computer program thereon, wherein the computer program, when executed by a processor, cause the processor to implement the method for registering an optical network unit of any one of claims 1 to 5 or any one of claims 6 to 9.

## Patentansprüche

1. Verfahren zum Registrieren einer optischen Netzwerkeinheit, ONU, das auf die ONU angewendet wird, umfassend:
Bestimmen (S110) eines aktuellen Arbeitstyps der ONU gemäß einem Arbeitstyp, der aktuell von der ONU unterstützt wird, und einer Downlink-Nachricht von einem optischen Leitungsendgerät, OLT, wobei die Downlink-Nachricht zum Angeben eines Arbeitstyps der vom OLT unterstützten ONU konfiguriert ist; und
Vervollständigen (S120) einer Registrierung beim OLT auf der Basis des bestimmten aktuellen Arbeitstyps der ONU,
wobei der Arbeitstyp der ONU aus einem Arbeitstyp ohne niedrige Latenz und einem Arbeitstyp mit niedriger Latenz ausgewählt wird, und
wobei,
in einem Fall, in dem die ONU eine Service-Uplink-Wellenlänge mit niedriger Latenz, eine Service-Downlink-Wellenlänge mit niedriger Latenz und eine Uplink-Wellenlänge zur Registrierung unterstützt, der Arbeitstyp der ONU ein erster Typ von Arbeitstypen mit niedriger Latenz unter den Arbeitstypen mit niedriger Latenz ist; und in einem Fall, in dem die ONU die Service-Uplink-Wellenlänge mit niedriger Latenz, die Service-Downlink-Wellenlänge mit niedriger Latenz, die Uplink-Wellenlänge zur Registrierung und eine Downlink-Wellenlänge zur Registrierung unterstützt, der Arbeitstyp der ONU ein zweiter Typ von Arbeitstypen mit niedriger Latenz unter den Arbeitstypen mit niedriger Latenz ist, wobei der erste Typ von Arbeitstypen mit niedriger Latenz und der zweite Typ von Arbeitstypen mit niedriger Latenz unterschiedliche Arbeitstypen mit niedriger Latenz sind.

2. Verfahren nach Anspruch 1, wobei
das Bestimmen des aktuellen Arbeitstyps der ONU gemäß dem Arbeitstyp, der aktuell von der ONU unterstützt wird, und der Downlink-Nachricht vom optischen Leitungsendgerät, OLT, Folgendes umfasst: in einem Fall, in dem ein gleicher Arbeitstyp in dem von der ONU unterstützten Arbeitstyp und dem vom OLT unterstützten Arbeitstyp der ONU enthalten ist, Auswählen eines Arbeitstyps aus dem enthaltenen gleichen Arbeitstyp als den aktuellen Arbeitstyp der ONU.

3. Verfahren nach Anspruch 1, wobei das Vervollständigen (S120) der Registrierung beim OLT auf der Basis des bestimmten aktuellen Arbeitstyps der ONU Folgendes umfasst:
als Reaktion auf eine Bestimmung, dass der aktuelle Arbeitstyp der ONU ein Typ ohne niedrige Latenz ist, Vervollständigen der Registrierung beim OLT auf der Basis der Service-Uplink-Wellenlänge mit niedriger Latenz und der Service-Downlink-Wellenlänge mit niedriger Latenz, die von der ONU und zwischen der ONU und dem OLT unterstützt werden;
als Reaktion auf eine Bestimmung, dass der aktuelle Arbeitstyp der ONU der erste Typ von Arbeitstypen mit niedriger Latenz ist, Vervollständigen der Registrierung beim OLT auf der Basis der Service-Downlink-Wellenlänge mit niedriger Latenz und der Uplink-Wellenlänge zur Registrierung, die von der ONU und zwischen der ONU und dem OLT unterstützt werden; und
als Reaktion auf eine Bestimmung, dass der aktuelle Arbeitstyp der ONU der zweite Typ von Arbeitstypen mit niedriger Latenz ist, Vervollständigen der Registrierung beim OLT auf der Basis der Service-Uplink-Wellenlänge mit niedriger Latenz, der Service-Downlink-Wellenlänge mit niedriger Latenz, der Uplink-Wellenlänge zur Registrierung und der Downlink-Wellenlänge zur Registrierung, die von der ONU und zwischen der ONU und dem OLT unterstützt werden.

4. Verfahren nach Anspruch 3, wobei das Vervollständigen der Registrierung beim OLT auf der Basis der Service-Uplink-Wellenlänge mit niedriger Latenz und der Service-Downlink-Wellenlänge mit niedriger Latenz, die von der ONU und zwischen der ONU und dem OLT unterstützt werden, Folgendes umfasst: Empfangen einer Seriennummernanforderungsnachricht auf der Service-Downlink-Wellenlänge mit niedriger Latenz und Antworten auf Seriennummerinformationen der ONU beim OLT auf der Service-Uplink-Wellenlänge mit niedriger Latenz; Verwenden einer Identitätsinformationszuweisungsnachricht, die auf der Service-Downlink-Wellenlänge mit niedriger Latenz empfangen wird, als eine Reichweitenanforderung und Senden einer Reichweitenantwortnachricht der Reichweitenanforderung auf der Service-Uplink-Wellenlänge mit niedriger Latenz; und Empfangen eines Entzerrungsverzögerungsparameters, der auf der Service-Downlink-Wellenlänge mit niedriger Latenz getragen wird, und Eintreten in einen Arbeitszustand, um die Registrierung beim OLT zu vervollständigen,
oder wobei das Vervollständigen der Registrierung beim OLT auf der Basis der Service-Downlink-Wellenlänge mit niedriger Latenz und der Uplink-Wellenlänge zur Registrierung, die von der ONU und zwischen der ONU und dem OLT unterstützt werden, Folgendes umfasst: Empfangen einer Seriennummernanforderungsnachricht auf der Service-Downlink-Wellenlänge mit niedriger Latenz und Antworten auf Seriennummerinformationen der ONU beim OLT auf der Uplink-Wellenlänge zur Registrierung; Empfangen einer Reichweitenanforderung durch die Service-Downlink-Wellenlänge mit niedriger Latenz und Senden einer Reichweitenantwortnachricht der Reichweitenanforderung auf der Uplink-Wellenlänge zur Registrierung; und Empfangen eines Entzerrungsverzögerungsparameters, der auf der Service-Downlink-Wellenlänge mit niedriger Latenz getragen wird, und Eintreten der ONU in einen Arbeitszustand, um das Registrierungsverfahren zu vervollständigen,
oder wobei das Vervollständigen der Registrierung beim OLT auf der Basis der Service-Uplink-Wellenlänge mit niedriger Latenz, der Service-Downlink-Wellenlänge mit niedriger Latenz, der Uplink-Wellenlänge zur Registrierung und der Downlink-Wellenlänge zur Registrierung, die von der ONU und zwischen der ONU und dem OLT unterstützt werden, Folgendes umfasst: in einem Prozess der Registrierung beim OLT durch die Uplink-Wellenlänge zur Registrierung und die Downlink-Wellenlänge zur Registrierung Senden von Seriennummerinformationen der ONU und einer Reichweitenantwortnachricht beim OLT; Empfangen einer Identitätsinformationszuweisungsnachricht vom OLT durch die Service-Downlink-Wellenlänge mit niedriger Latenz, um Identitätsinformationen der ONU zu erfassen, die in der Identitätsinformationszuweisungsnachricht getragen werden; und Empfangen eines Entzerrungsverzögerungsparameters, der auf der Service-Downlink-Wellenlänge mit niedriger Latenz getragen wird, und Eintreten in einen Arbeitszustand, um die Registrierung beim OLT zu vervollständigen.

5. Verfahren nach Anspruch 1, wobei
die Downlink-Nachricht eine Typanzeigenachricht ist, die vor der Registrierung beim OLT empfangen wird; und
die Typanzeigenachricht eine Nachricht über Operationen, Verwaltung und Wartung der physikalischen Schicht, PLOAM-Nachricht, ist und der Arbeitstyp der vom OLT unterstützten ONU in einem vorbestimmten Bit der PLOAM-Nachricht getragen wird; oder die Typanzeigenachricht ein vom OLT gesendeter Downlink-Rahmen ist und der Arbeitstyp der vom OLT unterstützten ONU in einem vorbestimmten Bit einer Rahmenkopfzeile des Downlink-Rahmens getragen wird,
oder wobei die Typanzeigenachricht ein vom OLT gesendeter Downlink-Rahmen ist, der Arbeitstyp der vom OLT unterstützten ONU in einem vorbestimmten Bit einer Rahmenkopfzeile des Downlink-Rahmens getragen wird und das vorbestimmte Bit der Rahmenkopfzeile des Downlink-Rahmens Folgendes umfasst: ein vorbestimmtes Bit eines Downlink-Synchronisationsblocks der physikalischen Schicht, PSBd, in der Rahmenkopfzeile des Downlink-Rahmens oder ein vorbestimmtes Bit eines Felds einer Kennung eines passiven optischen Netzwerks des PSBd,
oder wobei die Downlink-Nachricht eine Seriennummernanforderungsnachricht ist, die in einem Prozess der Registrierung beim OLT empfangen wird; das Verfahren ferner Folgendes umfasst: in einem Fall, in dem die empfangene Seriennummernanforderungsnachricht eine Nachricht ist, die auf der Service-Downlink-Wellenlänge mit niedriger Latenz empfangen wird, und eine Zuweisungskennung mit einem voreingestellten ersten Zuweisungskennungswert in der empfangenen Seriennummernanforderungsnachricht getragen wird, Bestimmen, dass der Arbeitstyp der vom OLT unterstützten ONU der Arbeitstyp ohne niedrige Latenz ist; in einem Fall, in dem die empfangene Seriennummernanforderungsnachricht eine Nachricht ist, die auf der Service-Downlink-Wellenlänge mit niedriger Latenz empfangen wird, und eine Zuweisungskennung mit einem voreingestellten zweiten Zuweisungskennungswert in der empfangenen Seriennummernanforderungsnachricht getragen wird, Bestimmen, dass der Arbeitstyp der vom OLT unterstützten ONU der erste Typ von Arbeitstyp mit niedriger Latenz ist; in einem Fall, in dem die empfangene Seriennummernanforderungsnachricht eine Seriennummernanforderungsnachricht, die auf der Downlink-Wellenlänge zur Registrierung empfangen wird, mit einer Zuweisungskennung mit dem ersten Zuweisungskennungswert, der in der Seriennummernanforderungsnachricht getragen wird, und eine Seriennummernanforderungsnachricht, die auf der Service-Downlink-Wellenlänge mit niedriger Latenz empfangen wird, mit einer Zuweisungskennung mit dem zweiten Zuweisungskennungswert, der in der Seriennummernanforderungsnachricht getragen wird, umfasst, Bestimmen, dass Arbeitstypen der vom OLT unterstützten ONU der erste Typ von Arbeitstyp mit niedriger Latenz und der zweite Typ von Arbeitstyp mit niedriger Latenz sind;
oder wobei in einem Fall des Bestimmens, dass der aktuelle Arbeitstyp der ONU der zweite Typ von Arbeitstyp mit niedriger Latenz ist, nach dem Vervollständigen der Registrierung beim OLT auf der Basis des bestimmten aktuellen Arbeitstyps der ONU das Verfahren ferner Folgendes umfasst:
Empfangen einer Registrierungsvervollständigungsbestätigungsnachricht vom OLT, wobei die Registrierungsvervollständigungsbestätigungsnachricht konfiguriert ist, um zu bestätigen, ob die ONU die Registrierung normal vervollständigt; und als Reaktion auf die
Registrierungsvervollständigungsbestätigungsnachricht Senden einer Online-Bestätigungsnachricht zum OLT.

6. Verfahren zum Registrieren einer optischen Netzwerkeinheit, ONU, das auf ein optisches Leitungsendgerät, OLT, angewendet wird, umfassend:
Senden (S210) einer Downlink-Nachricht zur ONU, so dass die ONU einen Arbeitstyp der ONU gemäß einem unterstützten Arbeitstyp und der Downlink-Nachricht bestimmt, wobei die Downlink-Nachricht zum Angeben eines Arbeitstyps der vom OLT unterstützten ONU konfiguriert ist; und
Vervollständigen (S220) einer Registrierung der ONU durch das OLT gemäß dem unterstützten Arbeitstyp der ONU,
wobei der Arbeitstyp der ONU aus einem Arbeitstyp ohne niedrige Latenz und einem Arbeitstyp mit niedriger Latenz ausgewählt wird,
wobei,
in einem Fall, in dem die ONU eine Service-Uplink-Wellenlänge mit niedriger Latenz, eine Service-Downlink-Wellenlänge mit niedriger Latenz und eine Uplink-Wellenlänge zur Registrierung unterstützt, der Arbeitstyp der ONU ein erster Typ von Arbeitstypen mit niedriger Latenz unter den Arbeitstypen mit niedriger Latenz ist; und in einem Fall, in dem die ONU die Service-Uplink-Wellenlänge mit niedriger Latenz, die Service-Downlink-Wellenlänge mit niedriger Latenz, die Uplink-Wellenlänge zur Registrierung und eine Downlink-Wellenlänge zur Registrierung unterstützt, der Arbeitstyp der ONU ein zweiter Typ von Arbeitstypen mit niedriger Latenz unter den Arbeitstypen mit niedriger Latenz ist, wobei der erste Typ von Arbeitstypen mit niedriger Latenz und der zweite Typ von Arbeitstypen mit niedriger Latenz unterschiedliche Arbeitstypen mit niedriger Latenz sind.

7. Verfahren nach Anspruch 6, wobei das Vervollständigen (S220) der Registrierung der ONU durch das OLT gemäß dem unterstützten Arbeitstyp der ONU Folgendes umfasst:
in einem Fall, in dem der Arbeitstyp der ONU, der vom OLT unterstützt wird, der Arbeitstyp ohne niedrige Latenz ist, Vervollständigen der Registrierung der ONU auf der Basis der Service-Uplink-Wellenlänge mit niedriger Latenz und der Service-Downlink-Wellenlänge mit niedriger Latenz zwischen der ONU und dem OLT;
in einem Fall, in dem der Arbeitstyp der ONU, der vom OLT unterstützt wird, der erste Typ von Arbeitstypen mit niedriger Latenz ist, Vervollständigen der Registrierung der ONU auf der Basis der Service-Downlink-Wellenlänge mit niedriger Latenz und der Uplink-Wellenlänge zur Registrierung zwischen der ONU und dem OLT; und
in einem Fall, in dem der Arbeitstyp der ONU, der vom OLT unterstützt wird, der zweite Typ von Arbeitstypen mit niedriger Latenz ist, Vervollständigen der Registrierung der ONU auf der Basis der Service-Uplink-Wellenlänge mit niedriger Latenz, der Service-Downlink-Wellenlänge mit niedriger Latenz, der Uplink-Wellenlänge zur Registrierung und der Downlink-Wellenlänge zur Registrierung zwischen der ONU und dem OLT.

8. Verfahren nach Anspruch 7, wobei das Vervollständigen der Registrierung der ONU auf der Basis der Service-Uplink-Wellenlänge mit niedriger Latenz und der Service-Downlink-Wellenlänge mit niedriger Latenz zwischen der ONU und dem OLT Folgendes umfasst: Senden einer Seriennummernanforderungsnachricht auf der Service-Downlink-Wellenlänge mit niedriger Latenz und Empfangen von Seriennummerninformationen, die von der ONU auf der Service-Uplink-Wellenlänge mit niedriger Latenz beantwortet werden; Übertragen einer Identitätsinformationszuweisungsnachricht auf der Service-Downlink-Wellenlänge mit niedriger Latenz und Empfangen einer Reichweitenantwortnachricht auf der Service-Uplink-Wellenlänge mit niedriger Latenz; und Senden eines Entzerrungsverzögerungsparameters an die ONU durch die Service-Downlink-Wellenlänge mit niedriger Latenz, um die Registrierung der ONU zu vervollständigen,
oder wobei das Vervollständigen der Registrierung der ONU auf der Basis der Service-Downlink-Wellenlänge mit niedriger Latenz und der Uplink-Wellenlänge zur Registrierung zwischen der ONU und dem OLT Folgendes umfasst: Senden einer Seriennummernanforderungsnachricht auf der Service-Downlink-Wellenlänge mit niedriger Latenz und Empfangen von Seriennummerinformationen, die von der ONU auf der Uplink-Wellenlänge zur Registrierung beantwortet werden; Senden einer Reichweitenanforderung an die ONU auf der Service-Downlink-Wellenlänge mit niedriger Latenz und Empfangen einer Reichweitenantwortnachricht der ONU für die Reichweitenanforderung auf der Uplink-Wellenlänge zur Registrierung; und Senden eines Entzerrungsverzögerungsparameters an die ONU durch die Service-Downlink-Wellenlänge mit niedriger Latenz, um die Registrierung der ONU zu vervollständigen,
oder wobei das Vervollständigen der Registrierung der ONU auf der Basis der Service-Uplink-Wellenlänge mit niedriger Latenz, der Service-Downlink-Wellenlänge mit niedriger Latenz, der Uplink-Wellenlänge zur Registrierung und der Downlink-Wellenlänge zur Registrierung zwischen der ONU und dem OLT Folgendes umfasst: in einem Prozess der Registrierung der ONU durch die Uplink-Wellenlänge zur Registrierung und die Downlink-Wellenlänge zur Registrierung Erhalten von Seriennummerinformationen der ONU und einer Reichweitenantwortnachricht; Zuweisen von Identitätsinformationen für die ONU durch die Seriennummerinformationen der ONU und Erzeugen eines Entzerrungsverzögerungsparameters der ONU; Senden einer Identitätsinformationszuweisungsnachricht, die die Identitätsinformationen trägt, auf der Service-Downlink-Wellenlänge mit niedriger Latenz; und Senden des Entzerrungsverzögerungsparameters durch die Service-Downlink-Wellenlänge mit niedriger Latenz, um die Registrierung der ONU zu vervollständigen.

9. Verfahren nach Anspruch 6, wobei
die Downlink-Nachricht eine Typanzeigenachricht ist, die vor dem Starten der Registrierung der ONU an die ONU gesendet wird; wobei
die Typanzeigenachricht eine Nachricht über Operationen, Verwaltung und Wartung der physikalischen Schicht, PLOAM-Nachricht, ist und der Arbeitstyp der vom OLT unterstützten ONU in einem vorbestimmten Bit der PLOAM-Nachricht getragen wird; oder die Typanzeigenachricht ein vom OLT gesendeter Downlink-Rahmen ist und der Arbeitstyp der vom OLT unterstützten ONU in einem vorbestimmten Bit einer Rahmenkopfzeile des Downlink-Rahmens getragen wird,
oder wobei die Typanzeigenachricht ein vom OLT gesendeter Downlink-Rahmen ist, der Arbeitstyp der vom OLT unterstützten ONU in einem vorbestimmten Bit einer Rahmenkopfzeile des Downlink-Rahmens getragen wird und das vorbestimmte Bit der Rahmenkopfzeile des Downlink-Rahmens Folgendes umfasst: ein vorbestimmtes Bit eines Downlink-Synchronisationsblocks der physikalischen Schicht, PSBd, in der Rahmenkopfzeile des Downlink-Rahmens oder ein vorbestimmtes Bit eines Felds einer Kennung eines passiven optischen Netzwerks des PSBd,
oder wobei die Downlink-Nachricht eine Seriennummernanforderungsnachricht ist, die in einem Prozess des Vervollständigens der Registrierung der ONU gesendet wird; das Verfahren ferner Folgendes umfasst: in einem Fall, in dem der Arbeitstyp der vom OLT unterstützten ONU der Arbeitstyp ohne niedrige Latenz ist, Senden der Seriennummernanforderungsnachricht auf der Service-Downlink-Wellenlänge mit niedriger Latenz mit einer Zuweisungskennung mit einem voreingestellten ersten Zuweisungskennungswert, der in der Seriennummernanforderungsnachricht getragen wird; in einem Fall, in dem der Arbeitstyp der vom OLT unterstützten ONU der erste Typ von Arbeitstyp mit niedriger Latenz ist, Senden der Seriennummernanforderungsnachricht auf der Service-Downlink-Wellenlänge mit niedriger Latenz mit einer Zuweisungskennung mit einem voreingestellten zweiten Zuweisungskennungswert, der in der Seriennummernanforderungsnachricht getragen wird; in einem Fall, in dem der Arbeitstyp der vom OLT unterstützten ONU den ersten Typ von Arbeitstyp mit niedriger Latenz und den zweiten Typ von Arbeitstyp mit niedriger Latenz umfasst, Senden einer Seriennummernanforderungsnachricht auf der Downlink-Wellenlänge zur Registrierung mit der Zuweisungskennung mit dem ersten Zuweisungskennungswert, der in der Seriennummernanforderungsnachricht getragen wird, und Senden einer Seriennummernanforderungsnachricht auf der Service-Downlink-Wellenlänge mit niedriger Latenz mit der Zuweisungskennung mit dem zweiten Zuweisungskennungswert, der in der Seriennummernanforderungsnachricht getragen wird; wobei der erste Typ von Arbeitstyp mit niedriger Latenz und der zweite Typ von Arbeitstyp mit niedriger Latenz zwei unterschiedliche Arbeitstypen mit niedriger Latenz unter Arbeitstypen der ONU sind,
oder wobei in einem Fall, in dem der Arbeitstyp der vom OLT unterstützten ONU der zweite Typ von Arbeitstyp mit niedriger Latenz ist, nachdem das OLT die Registrierung der ONU gemäß dem unterstützten Arbeitstyp der ONU vervollständigt, das Verfahren ferner Folgendes umfasst:
Senden einer Registrierungsvervollständigungsbestätigungsnachricht zur ONU, wobei die Registrierungsvervollständigungsbestätigungsnachricht konfiguriert ist, um zu bestätigen, ob die ONU die Registrierung normal vervollständigt; und
Empfangen einer Online-Bestätigungsnachricht von der ONU.

10. Optische Netzwerkeinheit, ONU, umfassend:
ein Arbeitstypbestimmungsmodul (310), das zum Bestimmen eines aktuellen Arbeitstyps der ONU gemäß einem Arbeitstyp, der aktuell von der ONU unterstützt wird, und einer Downlink-Nachricht von einem optischen Leitungsendgerät, OLT, konfiguriert ist, wobei die Downlink-Nachricht zum Angeben eines Arbeitstyps der vom OLT unterstützten ONU konfiguriert ist; und
ein Registrierungsmodul (320), das zum Vervollständigen einer Registrierung beim OLT auf der Basis des bestimmten aktuellen Arbeitstyps der ONU konfiguriert ist,
wobei der Arbeitstyp der ONU aus einem Arbeitstyp ohne niedrige Latenz und einem Arbeitstyp mit niedriger Latenz ausgewählt wird,
wobei,
in einem Fall, in dem die ONU eine Service-Uplink-Wellenlänge mit niedriger Latenz, eine Service-Downlink-Wellenlänge mit niedriger Latenz und eine Uplink-Wellenlänge zur Registrierung unterstützt, der Arbeitstyp der ONU ein erster Typ von Arbeitstypen mit niedriger Latenz unter den Arbeitstypen mit niedriger Latenz ist; und in einem Fall, in dem die ONU die Service-Uplink-Wellenlänge mit niedriger Latenz, die Service-Downlink-Wellenlänge mit niedriger Latenz, die Uplink-Wellenlänge zur Registrierung und eine Downlink-Wellenlänge zur Registrierung unterstützt, der Arbeitstyp der ONU ein zweiter Typ von Arbeitstypen mit niedriger Latenz unter den Arbeitstypen mit niedriger Latenz ist, wobei der erste Typ von Arbeitstypen mit niedriger Latenz und der zweite Typ von Arbeitstypen mit niedriger Latenz unterschiedliche Arbeitstypen mit niedriger Latenz sind.

11. Optisches Leitungsendgerät, OLT, umfassend:
ein Downlink-Nachrichtensendemodul (410), das zum Senden einer Downlink-Nachricht zu einer ONU konfiguriert ist, so dass die ONU einen Arbeitstyp der ONU gemäß einem unterstützten Arbeitstyp und der Downlink-Nachricht bestimmt, wobei die Downlink-Nachricht zum Angeben eines Arbeitstyps der vom OLT unterstützten ONU konfiguriert ist; und
ein Registrierungsmodul (420), das zum Vervollständigen einer Registrierung der ONU gemäß dem unterstützten Arbeitstyp der ONU konfiguriert ist,
wobei der Arbeitstyp der ONU aus einem Arbeitstyp ohne niedrige Latenz und einem Arbeitstyp mit niedriger Latenz ausgewählt wird,
wobei,
in einem Fall, in dem die ONU eine Service-Uplink-Wellenlänge mit niedriger Latenz, eine Service-Downlink-Wellenlänge mit niedriger Latenz und eine Uplink-Wellenlänge zur Registrierung unterstützt, der Arbeitstyp der ONU ein erster Typ von Arbeitstypen mit niedriger Latenz unter den Arbeitstypen mit niedriger Latenz ist; und in einem Fall, in dem die ONU die Service-Uplink-Wellenlänge mit niedriger Latenz, die Service-Downlink-Wellenlänge mit niedriger Latenz, die Uplink-Wellenlänge zur Registrierung und eine Downlink-Wellenlänge zur Registrierung unterstützt, der Arbeitstyp der ONU ein zweiter Typ von Arbeitstypen mit niedriger Latenz unter den Arbeitstypen mit niedriger Latenz ist, wobei der erste Typ von Arbeitstypen mit niedriger Latenz und der zweite Typ von Arbeitstypen mit niedriger Latenz unterschiedliche Arbeitstypen mit niedriger Latenz sind.

12. Optisches Netzwerksystem (500), umfassend ein optisches Leitungsendgerät, OLT, (510) und eine optische Netzwerkeinheit, ONU, (520), wobei
das OLT (510) zum Senden einer Downlink-Nachricht zur ONU (520) konfiguriert ist, wobei die Downlink-Nachricht zum Angeben eines Arbeitstyps der vom OLT (510) unterstützten ONU (520) konfiguriert ist; und
die ONU (520) zum Bestimmen eines aktuellen Arbeitstyps der ONU (520) gemäß einem aktuell von der ONU (520) unterstützten Arbeitstyp und der Downlink-Nachricht vom OLT (510) und zum Vervollständigen einer Registrierung beim OLT (510) auf der Basis des bestimmten aktuellen Arbeitstyps der ONU (520) konfiguriert ist,
wobei der Arbeitstyp der ONU aus einem Arbeitstyp ohne niedrige Latenz und einem Arbeitstyp mit niedriger Latenz ausgewählt wird,
wobei,
in einem Fall, in dem die ONU eine Service-Uplink-Wellenlänge mit niedriger Latenz, eine Service-Downlink-Wellenlänge mit niedriger Latenz und eine Uplink-Wellenlänge zur Registrierung unterstützt, der Arbeitstyp der ONU ein erster Typ von Arbeitstypen mit niedriger Latenz unter den Arbeitstypen mit niedriger Latenz ist; und in einem Fall, in dem die ONU die Service-Uplink-Wellenlänge mit niedriger Latenz, die Service-Downlink-Wellenlänge mit niedriger Latenz, die Uplink-Wellenlänge zur Registrierung und eine Downlink-Wellenlänge zur Registrierung unterstützt, der Arbeitstyp der ONU ein zweiter Typ von Arbeitstypen mit niedriger Latenz unter den Arbeitstypen mit niedriger Latenz ist, wobei der erste Typ von Arbeitstypen mit niedriger Latenz und der zweite Typ von Arbeitstypen mit niedriger Latenz unterschiedliche Arbeitstypen mit niedriger Latenz sind.

13. System zum Registrieren einer optischen Netzwerkeinheit, ONU, umfassend einen Speicher und einen Prozessor; wobei
der Speicher zum Speichern von ausführbaren Programmcodes konfiguriert ist; und
der Prozessor zum Lesen der im Speicher gespeicherten ausführbaren Programmcodes zum Ausführen des Verfahrens zum Registrieren einer optischen Netzwerkeinheit nach einem der Ansprüche 1 bis 5 oder einem der Ansprüche 6 bis 9 konfiguriert ist.

14. Speichermedium zum Speichern eines Computerprogramms darauf, wobei das Computerprogramm bei Ausführung durch einen Prozessor den Prozessor zum Implementieren des Verfahrens zum Registrieren einer optischen Netzwerkeinheit nach einem der Ansprüche 1 bis 5 oder einem der Ansprüche 6 bis 9 veranlasst.

## Revendications

1. Procédé pour enregistrer une unité de réseau optique, ONU, appliqué à l'ONU, comprenant les étapes consistant à :
déterminer (S110) un type de travail actuel de l'ONU en fonction d'un type de travail actuellement pris en charge par l'ONU et d'un message de liaison descendante provenant d'un terminal de ligne optique, OLT, dans lequel le message de liaison descendante est configuré pour indiquer un type de travail de l'ONU pris en charge par l'OLT ; et
compléter (S120) un enregistrement auprès de l'OLT sur la base du type de travail actuel déterminé de l'ONU,
dans lequel le type de travail de l'ONU est sélectionné parmi l'un d'un type de travail non à faible latence et d'un type de travail à faible latence, et
dans lequel,
dans un cas où l'ONU prend en charge une longueur d'onde de liaison montante de service à faible latence, une longueur d'onde de liaison descendante de service à faible latence et une longueur d'onde de liaison montante pour l'enregistrement, le type de travail de l'ONU est un premier type de type à faible latence parmi des types de travail à faible latence ; et dans un cas où l'ONU prend en charge la longueur d'onde de liaison montante de service à faible latence, la longueur d'onde de liaison descendante de service à faible latence, la longueur d'onde de liaison montante pour l'enregistrement et une longueur d'onde de liaison descendante pour l'enregistrement, le type de travail de l'ONU est un second type de type à faible latence parmi les types de travail à faible latence, dans lequel le premier type de type à faible latence et le second type de type à faible latence sont des types de travail à faible latence différents.

2. Procédé selon la revendication 1, dans lequel,
déterminer le type de travail actuel de l'ONU en fonction du type de travail actuellement pris en charge par l'ONU et du message de liaison descendante provenant du terminal de ligne optique, OLT, comprend les étapes consistant à : dans un cas où un même type de travail est contenu dans le type de travail pris en charge par l'ONU et le type de travail de l'ONU pris en charge par l'OLT, sélectionner, à partir du même type de travail contenu, un type de travail en tant que type de travail actuel de l'ONU.

3. Procédé selon la revendication 1, dans lequel compléter (S120) l'enregistrement auprès de l'OLT sur la base du type de travail actuel déterminé de l'ONU comprend les étapes consistant à :
en réponse à une détermination que le type de travail actuel de l'ONU est un type non à faible latence, compléter l'enregistrement auprès de l'OLT sur la base de la longueur d'onde de liaison montante de service à faible latence et de la longueur d'onde de liaison descendante de service à faible latence prises en charge par l'ONU et entre l'ONU et l'OLT ;
en réponse à une détermination que le type de travail actuel de l'ONU est le premier type de type à faible latence, compléter l'enregistrement auprès de l'OLT sur la base de la longueur d'onde de liaison descendante de service à faible latence et de la longueur d'onde de liaison montante pour l'enregistrement prises en charge par l'ONU et entre l'ONU et l'OLT ; et
en réponse à une détermination que le type de travail actuel de l'ONU est le second type de type à faible latence, compléter l'enregistrement auprès de l'OLT sur la base de la longueur d'onde de liaison montante de service à faible latence, de la longueur d'onde de liaison descendante de service à faible latence, de la longueur d'onde de liaison montante pour l'enregistrement et de la longueur d'onde de liaison descendante pour l'enregistrement prises en charge par l'ONU et entre l'ONU et l'OLT.

4. Procédé selon la revendication 3, dans lequel compléter l'enregistrement auprès de l'OLT sur la base de la longueur d'onde de liaison montante de service à faible latence et de la longueur d'onde de liaison descendante de service à faible latence prises en charge par l'ONU et entre l'ONU et l'OLT comprend les étapes consistant à : recevoir un message de demande de numéro de série sur la longueur d'onde de liaison descendante de service à faible latence, et répondre à des informations de numéro de série de l'ONU auprès de l'OLT sur la longueur d'onde de liaison montante de service à faible latence ; utiliser un message d'attribution d'informations d'identité reçu sur la longueur d'onde de liaison descendante de service à faible latence en tant que demande de mesure de distance, et envoyer un message de réponse de mesure de distance de la demande de mesure de distance sur la longueur d'onde de liaison montante de service à faible latence ; et recevoir un paramètre de retard d'égalisation porté sur la longueur d'onde de liaison descendante de service à faible latence, et entrer dans un état de travail pour compléter l'enregistrement auprès de l'OLT,
ou, dans lequel compléter l'enregistrement auprès de l'OLT sur la base de la longueur d'onde de liaison descendante de service à faible latence et de la longueur d'onde de liaison montante pour l'enregistrement prises en charge par l'ONU et entre l'ONU et l'OLT comprend les étapes consistant à : recevoir un message de demande de numéro de série sur la longueur d'onde de liaison descendante de service à faible latence, et répondre à des informations de numéro de série de l'ONU auprès de l'OLT sur la longueur d'onde de liaison montante pour l'enregistrement ; recevoir une demande de mesure de distance par l'intermédiaire de la longueur d'onde de liaison descendante de service à faible latence, et envoyer un message de réponse de mesure de distance de la demande de mesure de distance sur la longueur d'onde de liaison montante pour l'enregistrement ; et recevoir un paramètre de retard d'égalisation porté sur la longueur d'onde de liaison descendante de service à faible latence, et l'ONU entrant dans un état de travail pour compléter le processus d'enregistrement,
ou, dans lequel compléter l'enregistrement auprès de l'OLT sur la base de la longueur d'onde de liaison montante de service à faible latence, de la longueur d'onde de liaison descendante de service à faible latence, de la longueur d'onde de liaison montante pour l'enregistrement et de la longueur d'onde de liaison descendante pour l'enregistrement prises en charge par l'ONU et entre l'ONU et l'OLT comprend les étapes consistant à : dans un processus d'enregistrement auprès de l'OLT par l'intermédiaire de la longueur d'onde de liaison montante pour l'enregistrement et de la longueur d'onde de liaison descendante pour l'enregistrement, envoyer des informations de numéro de série de l'ONU et un message de réponse de mesure de distance auprès de l'OLT ; recevoir un message d'attribution d'informations d'identité en provenance de l'OLT par l'intermédiaire de la longueur d'onde de liaison descendante de service à faible latence, pour acquérir des informations d'identité de l'ONU transportées dans le message d'attribution d'informations d'identité ; et recevoir un paramètre de retard d'égalisation porté sur la longueur d'onde de liaison descendante de service à faible latence, et entrer dans un état de travail pour compléter l'enregistrement auprès de l'OLT.

5. Procédé selon la revendication 1, dans lequel,
le message de liaison descendante est un message d'indication de type reçu avant l'enregistrement auprès de l'OLT ; et,
le message d'indication de type est un message d'opérations, d'administration et de maintenance de couche physique, PLOAM, et le type de travail de l'ONU pris en charge par l'OLT est transporté dans un bit prédéterminé du message PLOAM ; ou, le message d'indication de type est une trame de liaison descendante envoyée par l'OLT, et le type de travail de l'ONU pris en charge par l'OLT est transporté dans un bit prédéterminé d'un en-tête de trame de la trame de liaison descendante,
ou, dans lequel, le message d'indication de type est une trame de liaison descendante envoyée par l'OLT, le type de travail de l'ONU pris en charge par l'OLT est transporté dans un bit prédéterminé d'un en-tête de trame de la trame de liaison descendante, et le bit prédéterminé de l'en-tête de trame de la trame de liaison descendante comprend : un bit prédéterminé d'un bloc de synchronisation de couche physique, PSBd, de liaison descendante dans l'en-tête de trame de la trame de liaison descendante, ou un bit prédéterminé d'un champ d'identifiant de réseau optique passif du PSBd,
ou, dans lequel le message de liaison descendante est un message de demande de numéro de série reçu dans un processus d'enregistrement auprès de l'OLT ; le procédé comprend en outre les étapes consistant à : dans un cas où le message de demande de numéro de série reçu est un message reçu sur la longueur d'onde de liaison descendante de service à faible latence, et un identifiant d'attribution ayant une première valeur d'identifiant d'attribution prédéfinie est transporté dans le message de demande de numéro de série reçu, déterminer que le type de travail de l'ONU pris en charge par l'OLT est le type de travail non à faible latence ; dans un cas où le message de demande de numéro de série reçu est un message reçu sur la longueur d'onde de liaison descendante de service à faible latence, et un identifiant d'attribution ayant une seconde valeur d'identifiant d'attribution prédéfinie est transporté dans le message de demande de numéro de série reçu, déterminer que le type de travail de l'ONU pris en charge par l'OLT est le premier type de type à faible latence ; dans un cas où le message de demande de numéro de série reçu comprend un message de demande de numéro de série reçu sur la longueur d'onde de liaison descendante pour l'enregistrement avec un identifiant d'attribution ayant la première valeur d'identifiant d'attribution transportée dans le message de demande de numéro de série, et un message de demande de numéro de série reçu sur la longueur d'onde de liaison descendante de service à faible latence avec un identifiant d'attribution ayant la seconde valeur d'identifiant d'attribution transportée dans le message de demande de numéro de série, déterminer que des types de travail de l'ONU pris en charge par l'OLT sont le premier type de type à faible latence et le second type de type à faible latence ;
ou, dans lequel, dans un cas où il est déterminé que le type de travail actuel de l'ONU est le second type de type à faible latence, après avoir complété l'enregistrement auprès de l'OLT sur la base du type de travail actuel déterminé de l'ONU, le procédé comprend en outre les étapes consistant à :
recevoir un message d'accusé de réception de complétion d'enregistrement provenant de l'OLT, le message d'accusé de réception de complétion d'enregistrement étant configuré pour confirmer si l'ONU complète l'enregistrement normalement ; et en réponse au message d'accusé de réception de complétion d'enregistrement, envoyer un message d'accusé de réception en ligne à l'OLT.

6. Procédé pour enregistrer une unité de réseau optique, ONU, appliqué à un terminal de ligne optique, OLT, comprenant les étapes consistant à :
envoyer (S210) un message de liaison descendante à l'ONU de sorte que l'ONU détermine un type de travail de l'ONU en fonction d'un type de travail pris en charge et du message de liaison descendante, dans lequel le message de liaison descendante est configuré pour indiquer un type de travail de l'ONU pris en charge par l'OLT ; et
compléter (S220) par l'OLT un enregistrement de l'ONU en fonction du type de travail pris en charge de l'ONU,
dans lequel le type de travail de l'ONU est sélectionné parmi l'un d'un type de travail non à faible latence et d'un type de travail à faible latence,
dans lequel,
dans un cas où l'ONU prend en charge une longueur d'onde de liaison montante de service à faible latence, une longueur d'onde de liaison descendante de service à faible latence et une longueur d'onde de liaison montante pour l'enregistrement, le type de travail de l'ONU est un premier type de type à faible latence parmi des types de travail à faible latence ; et dans un cas où l'ONU prend en charge la longueur d'onde de liaison montante de service à faible latence, la longueur d'onde de liaison descendante de service à faible latence, la longueur d'onde de liaison montante pour l'enregistrement et une longueur d'onde de liaison descendante pour l'enregistrement, le type de travail de l'ONU est un second type de type à faible latence parmi les types de travail à faible latence, dans lequel le premier type de type à faible latence et le second type de type à faible latence sont des types de travail à faible latence différents.

7. Procédé selon la revendication 6, dans lequel compléter (S220) par l'OLT l'enregistrement de l'ONU en fonction du type de travail pris en charge de l'ONU comprend les étapes consistant à :
dans un cas où le type de travail de l'ONU pris en charge par l'OLT est le type de travail non à faible latence, compléter l'enregistrement de l'ONU sur la base de la longueur d'onde de liaison montante de service à faible latence et de la longueur d'onde de liaison descendante de service à faible latence entre l'ONU et l'OLT ;
dans un cas où le type de travail de l'ONU pris en charge par l'OLT est le premier type de type à faible latence, compléter l'enregistrement de l'ONU sur la base de la longueur d'onde de liaison descendante de service à faible latence et de la longueur d'onde de liaison montante pour l'enregistrement entre l'ONU et l'OLT ; et
dans un cas où le type de travail de l'ONU pris en charge par l'OLT est le second type de type à faible latence, compléter l'enregistrement de l'ONU sur la base de la longueur d'onde de liaison montante de service à faible latence, de la longueur d'onde de liaison descendante de service à faible latence, de la longueur d'onde de liaison montante pour l'enregistrement et de la longueur d'onde de liaison descendante pour l'enregistrement entre l'ONU et l'OLT.

8. Procédé selon la revendication 7, dans lequel compléter l'enregistrement de l'ONU sur la base de la longueur d'onde de liaison montante de service à faible latence et de la longueur d'onde de liaison descendante de service à faible latence entre l'ONU et l'OLT comprend les étapes consistant à : envoyer un message de demande de numéro de série sur la longueur d'onde de liaison descendante de service à faible latence, et recevoir des informations de numéro de série répondues par l'ONU sur la longueur d'onde de liaison montante de service à faible latence ; diffuser un message d'attribution d'informations d'identité sur la longueur d'onde de liaison descendante de service à faible latence, et recevoir un message de réponse de mesure de distance sur la longueur d'onde de liaison montante de service à faible latence ; et envoyer un paramètre de retard d'égalisation à l'ONU par l'intermédiaire de la longueur d'onde de liaison descendante de service à faible latence pour compléter l'enregistrement de l'ONU,
ou, dans lequel compléter l'enregistrement de l'ONU sur la base de la longueur d'onde de liaison descendante de service à faible latence et de la longueur d'onde de liaison montante pour l'enregistrement entre l'ONU et l'OLT comprend les étapes consistant à : envoyer un message de demande de numéro de série sur la longueur d'onde de liaison descendante de service à faible latence, et recevoir des informations de numéro de série répondues par l'ONU sur la longueur d'onde de liaison montante pour l'enregistrement ;
envoyer une demande de mesure de distance à l'ONU sur la longueur d'onde de liaison descendante de service à faible latence, et recevoir un message de réponse de mesure de distance de l'ONU pour la demande de mesure de distance sur la longueur d'onde de liaison montante pour l'enregistrement ; et
envoyer un paramètre de retard d'égalisation à l'ONU par l'intermédiaire de la longueur d'onde de liaison descendante de service à faible latence pour compléter l'enregistrement de l'ONU,
ou, dans lequel compléter l'enregistrement de l'ONU sur la base de la longueur d'onde de liaison montante de service à faible latence, de la longueur d'onde de liaison descendante de service à faible latence, de la longueur d'onde de liaison montante pour l'enregistrement et de la longueur d'onde de liaison descendante pour l'enregistrement entre l'ONU et l'OLT comprend les étapes consistant à : dans un processus d'enregistrement de l'ONU par l'intermédiaire de la longueur d'onde de liaison montante pour l'enregistrement et de la longueur d'onde de liaison descendante pour l'enregistrement, obtenir des informations de numéro de série de l'ONU et un message de réponse de mesure de distance ; attribuer des informations d'identité pour l'ONU par l'intermédiaire des informations de numéro de série de l'ONU, et générer un paramètre de retard d'égalisation de l'ONU ; envoyer un message d'attribution d'informations d'identité transporter les informations d'identité sur la longueur d'onde de liaison descendante de service à faible latence ; et envoyer le paramètre de retard d'égalisation par l'intermédiaire de la longueur d'onde de liaison descendante de service à faible latence pour compléter l'enregistrement de l'ONU.

9. Procédé selon la revendication 6, dans lequel,
le message de liaison descendante est un message d'indication de type envoyé à l'ONU avant de démarrer l'enregistrement de l'ONU ; dans lequel,
le message d'indication de type est un message d'opérations, d'administration et de maintenance de couche physique, PLOAM, et le type de travail de l'ONU pris en charge par l'OLT est transporté dans un bit prédéterminé du message PLOAM ; ou, le message d'indication de type est une trame de liaison descendante envoyée par l'OLT, et le type de travail de l'ONU pris en charge par l'OLT est transporté dans un bit prédéterminé d'un en-tête de trame de la trame de liaison descendante,
ou, dans lequel, le message d'indication de type est une trame de liaison descendante envoyée par l'OLT, le type de travail de l'ONU pris en charge par l'OLT est transporté dans un bit prédéterminé d'un en-tête de trame de la trame de liaison descendante, et le bit prédéterminé de l'en-tête de trame de la trame de liaison descendante comprend : un bit prédéterminé d'un bloc de synchronisation de couche physique, PSBd, de liaison descendante dans l'en-tête de trame de la trame de liaison descendante, ou un bit prédéterminé d'un champ d'identifiant de réseau optique passif du PSBd,
ou, dans lequel le message de liaison descendante est un message de demande de numéro de série envoyé dans un processus consistant à compléter l'enregistrement de l'ONU ; le procédé comprend en outre les étapes consistant à : dans un cas où le type de travail de l'ONU pris en charge par l'OLT est le type de travail non à faible latence, envoyer le message de demande de numéro de série sur la longueur d'onde de liaison descendante de service à faible latence, avec un identifiant d'attribution ayant une première valeur d'identifiant d'attribution prédéfinie transportée dans le message de demande de numéro de série ; dans un cas où le type de travail de l'ONU pris en charge par l'OLT est le premier type de type à faible latence, envoyer le message de demande de numéro de série sur la longueur d'onde de liaison descendante de service à faible latence, avec un identifiant d'attribution ayant une seconde valeur d'identifiant d'attribution prédéfinie transportée dans le message de demande de numéro de série ; dans un cas où le type de travail de l'ONU pris en charge par l'OLT comprend le premier type de type à faible latence et le second type de type à faible latence, envoyer un message de demande de numéro de série sur la longueur d'onde de liaison descendante pour l'enregistrement, avec l'identifiant d'attribution ayant la première valeur d'identifiant d'attribution transportée dans le message de demande de numéro de série, et, envoyer un message de demande de numéro de série sur la longueur d'onde de liaison descendante de service à faible latence, avec l'identifiant d'attribution ayant la seconde valeur d'identifiant d'attribution transportée dans le message de demande de numéro de série ;
ou, dans lequel, dans un cas où le type de travail de l'ONU pris en charge par l'OLT est le second type de type à faible latence, après que l'OLT a complété l'enregistrement de l'ONU en fonction du type de travail pris en charge de l'ONU, le procédé comprend en outre les étapes consistant à : envoyer un message d'accusé de réception de complétion d'enregistrement à l'ONU, le message d'accusé de réception de complétion d'enregistrement étant configuré pour confirmer si l'ONU complète l'enregistrement normalement ; et recevoir un message d'accusé de réception en ligne provenant de l'ONU.

10. Unité de réseau optique, ONU, comprenant :
un module de détermination de type de travail (310) configuré pour déterminer un type de travail actuel de l'ONU en fonction d'un type de travail actuellement pris en charge par l'ONU et d'un message de liaison descendante provenant d'un terminal de ligne optique, OLT, dans lequel le message de liaison descendante est configuré pour indiquer un type de travail de l'ONU pris en charge par l'OLT ; et
un module d'enregistrement (320) configuré pour compléter un enregistrement auprès de l'OLT sur la base du type de travail actuel déterminé de l'ONU,
dans lequel le type de travail de l'ONU est sélectionné parmi l'un d'un type de travail non à faible latence et d'un type de travail à faible latence,
dans lequel,
dans un cas où l'ONU prend en charge une longueur d'onde de liaison montante de service à faible latence, une longueur d'onde de liaison descendante de service à faible latence et une longueur d'onde de liaison montante pour l'enregistrement, le type de travail de l'ONU est un premier type de type à faible latence parmi des types de travail à faible latence ; et dans un cas où l'ONU prend en charge la longueur d'onde de liaison montante de service à faible latence, la longueur d'onde de liaison descendante de service à faible latence, la longueur d'onde de liaison montante pour l'enregistrement et une longueur d'onde de liaison descendante pour l'enregistrement, le type de travail de l'ONU est un second type de type à faible latence parmi les types de travail à faible latence, dans lequel le premier type de type à faible latence et le second type de type à faible latence sont des types de travail à faible latence différents.

11. Terminal de ligne optique, OLT, comprenant :
un module d'envoi de message de liaison descendante (410) configuré pour envoyer un message de liaison descendante à une ONU de sorte que l'ONU détermine un type de travail de l'ONU en fonction d'un type de travail pris en charge et du message de liaison descendante, dans lequel le message de liaison descendante est configuré pour indiquer un type de travail de l'ONU pris en charge par l'OLT ; et
un module d'enregistrement (420) configuré pour compléter un enregistrement de l'ONU en fonction du type de travail pris en charge de l'ONU,
dans lequel le type de travail de l'ONU est sélectionné parmi l'un d'un type de travail non à faible latence et d'un type de travail à faible latence,
dans lequel,
dans un cas où l'ONU prend en charge une longueur d'onde de liaison montante de service à faible latence, une longueur d'onde de liaison descendante de service à faible latence et une longueur d'onde de liaison montante pour l'enregistrement, le type de travail de l'ONU est un premier type de type à faible latence parmi des types de travail à faible latence ; et dans un cas où l'ONU prend en charge la longueur d'onde de liaison montante de service à faible latence, la longueur d'onde de liaison descendante de service à faible latence, la longueur d'onde de liaison montante pour l'enregistrement et une longueur d'onde de liaison descendante pour l'enregistrement, le type de travail de l'ONU est un second type de type à faible latence parmi les types de travail à faible latence, dans lequel le premier type de type à faible latence et le second type de type à faible latence sont des types de travail à faible latence différents.

12. Système de réseau optique (500), comprenant un terminal de ligne optique, OLT, (510) et une unité de réseau optique, ONU, (520) dans lequel,
l'OLT (510) est configuré pour envoyer un message de liaison descendante à l'ONU (520), dans lequel le message de liaison descendante est configuré pour indiquer un type de travail de l'ONU (520) pris en charge par l'OLT (510) ; et
l'ONU (520) est configurée pour déterminer un type de travail actuel de l'ONU (520) en fonction d'un type de travail actuellement pris en charge par l'ONU (520) et du message de liaison descendante provenant de l'OLT (510), et compléter un enregistrement auprès de l'OLT (510) sur la base du type de travail actuel déterminé de l'ONU (520),
dans lequel le type de travail de l'ONU est sélectionné parmi l'un d'un type de travail non à faible latence et d'un type de travail à faible latence,
dans lequel,
dans un cas où l'ONU prend en charge une longueur d'onde de liaison montante de service à faible latence, une longueur d'onde de liaison descendante de service à faible latence et une longueur d'onde de liaison montante pour l'enregistrement, le type de travail de l'ONU est un premier type de type à faible latence parmi des types de travail à faible latence ; et dans un cas où l'ONU prend en charge la longueur d'onde de liaison montante de service à faible latence, la longueur d'onde de liaison descendante de service à faible latence, la longueur d'onde de liaison montante pour l'enregistrement et une longueur d'onde de liaison descendante pour l'enregistrement, le type de travail de l'ONU est un second type de type à faible latence parmi les types de travail à faible latence, dans lequel le premier type de type à faible latence et le second type de type à faible latence sont des types de travail à faible latence différents.

13. Système pour enregistrer une unité de réseau optique, ONU, comprenant une mémoire et un processeur ; dans lequel
la mémoire est configurée pour stocker des codes de programme exécutables ; et
le processeur est configuré pour lire les codes de programme exécutables stockés dans la mémoire pour exécuter le procédé pour enregistrer une unité de réseau optique selon l'une quelconque des revendications 1 à 5 ou l'une quelconque des revendications 6 à 9.

14. Moyen de stockage stockant un programme informatique sur celui-ci, dans lequel le programme informatique, lorsqu'il est exécuté par un processeur, amène le processeur à mettre en œuvre le procédé pour enregistrer une unité de réseau optique selon l'une quelconque des revendications 1 à 5 ou l'une quelconque des revendications 6 à 9.
